# FASCICULE DE BREVET EUROPEEN

(11) **EP 2 484 077 B1**
(45) Date de publication et mention de la délivrance du brevet: **20.10.2021**
(21) Numéro de dépôt: 10755177.2
(22) Date de dépôt: 21.09.2010
(51) Int. Cl.: H04L 9/32, H04L 29/06

(54) **SYSTEME ET PROCEDE D'ORDONNANCEMENT ET D'EXECUTION D'OPERATIONS DE CORRESPONDANCE ELECTRONIQUE SECURISEE**
SYSTEM UND VERFAHREN ZUR PLANUNG UND DURCHFÜHRUNG SICHERER ELEKTRONISCHER KORRESPONDENZVORGÄNGE
SYSTEM AND METHOD FOR PLANNING AND PERFORMING SECURE ELECTRONIC CORRESPONDENCE OPERATIONS

(30) Priorité: 30.09.2009 FR 0956823
(43) Date de publication de la demande: 08.08.2012
(73) Titulaire: Trustcorp S.A., 8008 Strassen (LU)
(72) Inventeur: BLOT-LEFEVRE, Eric, F-92200 Neuilly-sur-Seine (FR)
(74) Mandataire: Marks & Clerk France
(86) Numéro de dépôt international: PCT/EP2010/063875
(87) Numéro de publication internationale: WO 2011/039077

(56) Documents cités:
- WO-A1-00/25245
- FR-A1- 2 900 012
- FR-A1- 2 926 175
- FR-A1- 2 930 392
- SAGEDER S ET AL: "Case study: Using digital signatures for the archival of medical records in hospitals", RISKS AND SECURITY OF INTERNET AND SYSTEMS, 2008. CRISIS '08. THIRD INTERNATIONAL CONFERENCE ON, IEEE, PISCATAWAY, NJ, USA, 28 octobre 2008 (2008-10-28), pages 213-220, XP031410408, ISBN: 978-1-4244-3309-4
- Simson Garfinkel & Eugene H. Spafford: "Web Security & Commerce", , juin 1997 (1997-06), XP002611976, ISBN: 1-56592-269-7 Extrait de l'Internet: URL:http://www.securisite.org/biblioteca/O reilly/O%27Reilly%20-%20Web%20Security%20& %20Commerce.pdf [extrait le 2010-11-30]
- MEADORS K: "Secure Electronic Data Interchange over the Internet", IEEE INTERNET COMPUTING, IEEE SERVICE CENTER, NEW YORK, NY, US, vol. 9, no. 3, 1 mai 2005 (2005-05-01), pages 82-89, XP011133488, ISSN: 1089-7801, DOI: DOI:10.1109/MIC.2005.66
- None

## Description

La présente invention appartient au domaine des systèmes de correspondances électroniques sécurisées. Plus précisément, elle s'applique aux processus d'ordonnancement et d'exécution des opérations de tels systèmes dans une architecture permettant de garantir la valeur probante de telles correspondances. Les systèmes juridiques européens reconnaissent maintenant qu'un document électronique dont l'auteur est identifiable de manière sûre et qui est conservé dans des conditions qui permettent d'en garantir l'intégrité a la même valeur probante que l'écrit sur support papier (Article 1316 et suivants du Code civil français, par exemple). Cependant, les systèmes les plus répandus de production, tels qu'un traitement de texte générant un document au format PDF (Portable Digital File) et d'échange (messagerie électronique sur Internet) de documents électroniques ne permettent aujourd'hui de garantir ni l'identité de leur auteur ni leur intégrité. Le problème concerne à la fois les correspondances privées entre particuliers ou entre un particulier et une entreprise et une institution et les correspondances entre entreprises et administrations ou entre une entreprise ou une administration et ses clients ou ses usagers. Dans ce dernier cas, les flux de documents peuvent être particulièrement importants (plusieurs dizaines de millions de factures par mois sont adressées aux clients d'EDF, de GDF Suez, d'Orange). La fabrication et l'expédition de ces documents sont donc automatisées dans des chaînes de production qui font nécessairement intervenir de nombreux opérateurs. Si l'on veut garantir l'identité du document envoyé et archivé à celui produit originellement, il est donc nécessaire d'assurer une traçabilité de bout en bout de toutes ces opérations et une vérification que les opérateurs ont effectué les opérations qu'ils devaient exécuter. Cela vaut pour une chaîne de production de documents papier ou de documents électroniques. Par ailleurs, en cas d'envoi électronique, pour que les documents ainsi envoyés puissent être considérés comme valablement adressés, il faut à la fois que ces documents portent l'identification de l'expéditeur et que celui-ci se soit assuré de l'identité des destinataires. Des solutions partielles ont été apportées au problème de la valeur probante des documents électroniques échangés par voie électronique. En particulier, si l'expéditeur dispose d'un certificat de signature électronique délivré dans des conditions prescrites et dont la validité est vérifiée par une autorité de certification, son identité d'auteur d'un document électronique sur lequel il aura apposé ledit certificat sera reconnue comme valablement démontrée. Mais les certificats de signature électronique sont encore peu répandus en raison notamment de leur coût élevé et de leur incommodité d'emploi.

La demanderesse a donc déjà déposé des demandes de brevets en France ayant notamment pour but de fournir une note de l'identité d'un expéditeur et de destinataires de documents électroniques permettant de juger la valeur probante des documents échangés entre ces parties. Voir par exemple les demandes déposées sous les numéros FR/06 04 107, FR06 04108 et FR/08 02 239. En particulier, la demande FR06 04108 divulgue notamment un processus de traitement d'un document comprenant une étape de validation dudit document avant envoi. Mais elle ne divulgue pas la production, préalablement à cette étape de validation d'une pluralité de spécimens et de copies originales, l'identité des spécimens, des copies original et du document initial étant certifiée par un serveur de certification. La demande internationale WO00/25245 divulgue un système de notarisation de documents électroniques comprenant une validation du document électronique et la production de copies, mais les copies ne sont pas non plus certifiées par un tiers certificateur.

En outre, la demanderesse dépose le même jour que la présente demande une demande de brevet ayant pour objet de traiter principalement le problème de la certification de tous les attributs des utilisateurs du système de correspondance électronique sécurisé par un mécanisme de sessions et la certification des correspondances échangées par un mécanisme de jetons de certifications.

Pour améliorer encore la fiabilité des processus d'ordonnancement et d'exécution des correspondances électroniques sécurisées dans un contexte de production industrielle traitant des centaines de milliers voire des millions de documents par jour, il est cependant apparu nécessaire de pouvoir garantir la qualité et la conservation de documents dits originaux grâce à un processus d'ampliation de versions tracées par des jetons de certification.

A cet effet, la présente invention divulgue un système selon la revendication 1 de correspondance électronique sécurisée entre au moins un utilisateur expéditeur et au moins un utilisateur destinataire, ledit système comprenant au moins un serveur de domiciliation de correspondances électroniques, au moins un serveur de composition desdites correspondances et au moins un serveur de certification de correspondances électroniques, ledit serveur de composition générant pour chaque opération de correspondance à valeur probante au moins deux spécimens ainsi que deux originaux certifiés à valeur probante par ledit serveur de certification, ledit système étant caractérisé en ce qu'un des spécimens est traité pour être envoyé au destinataire de l'opération de correspondance après que ladite opération a été validée par l'utilisateur expéditeur au vu de l'autre spécimen mis à sa disposition sur un serveur de domiciliation.

Avantageusement, la preuve de validation de ladite opération effectuée par l'utilisateur expéditeur est horodatée et liée au spécimen ayant servi de base à la validation et à la preuve de l'authentification de d'utilisateur expéditeur par le serveur de domiciliation au sein d'un fichier structuré de signature juridique.

Avantageusement, une copie dudit fichier structuré de signature juridique est scellée par le serveur de domiciliation, archivée par un serveur d'archivage. Avantageusement, le fichier structuré de signature juridique, une preuve de son scellement et une preuve de son archivage sont enregistrés et déposés par le serveur de domiciliation sur le serveur d'un tiers séquestre. Avantageusement, un des originaux est archivé par un serveur d'archivage dans un coffre-fort électronique d'un utilisateur.

Avantageusement, entre la génération dudit document original et son archivage, deux exemplaires d'une clé symétrique de chiffrement, SYM1 et SYM2 sont générés par le serveur de domiciliation, ledit document original étant chiffré avec l'exemplaire de clé symétrique SYM1, ledit exemplaire SYM1 étant conservé dans le bureau privé de gestion de l'utilisateur, l'exemplaire de clé symétrique SYM2 étant transmis à un tiers séquestre SEQ après chiffrement dudit exemplaire SYM2 par une clé publique dudit tiers séquestre.

Avantageusement, entre la génération dudit document original et son archivage, deux exemplaires d'une clé symétrique de chiffrement, SYM1 et SYM2 sont générés par le serveur de domiciliation, ledit document original étant chiffré avec l'exemplaire de clé symétrique SYM1, ledit exemplaire SYM1 étant conservé dans le bureau privé de gestion de l'utilisateur, l'exemplaire de clé symétrique SYM2 étant transmis audit utilisateur après chiffrement dudit exemplaire SYM2 par une clé publique dudit utilisateur. Avantageusement, une copie dudit exemplaire SYM2 chiffré par une clé publique de l'utilisateur est transmise à l'opérateur d'archivage pour être conservée avec le document original dans le coffre-fort électronique de l'utilisateur.

Avantageusement, le serveur de composition génère en outre au moins deux duplicata dont l'un est destiné à être transféré dans le compte de correspondance de l'utilisateur expéditeur dans un livre de correspondance situé par un serveur de commutation et l'autre duplicata est destiné à être transféré dans le compte de correspondance d'un utilisateur destinataire dans un livre de correspondance par un serveur de commutation. Avantageusement, au moins un des duplicata est chiffré avec l'exemplaire de clé SYM1 avant transfert dans un livre de correspondance. Avantageusement, au moins un troisième duplicata est généré, ledit troisième duplicata étant chiffré avec une clé publique de l'utilisateur expéditeur/destinataire avant transfert vers une station de travail locale dudit utilisateur expéditeur/destinataire.

Avantageusement, ledit serveur de composition génère en outre un fichier de données vers un serveur de transmission.

Avantageusement, ledit serveur de composition génère en outre un fichier structuré de gestion destiné à être transmis à un serveur de gestion d'application d'un utilisateur destinataire.

Avantageusement, ladite transmission au serveur de gestion d'application d'au moins un utilisateur destinataire est effectuée en utilisant un protocole de type AS2.

Avantageusement, ledit serveur de composition génère en outre un fichier d'impression destiné à être transmis à au moins un serveur d'éditique. Avantageusement, ledit serveur de composition génère en outre au moins un coupon de gestion destiné à devenir une nouvelle correspondance électronique dont le contenu est au moins partiellement déterminé par des règles de gestion d'une suite de correspondances électroniques à laquelle ledit coupon est rattaché.

Avantageusement, la composition de ladite nouvelle correspondance électronique issue dudit coupon de gestion par un serveur de composition rattaché au serveur de certification ayant certifié l'ampliation dudit coupon de gestion n'est possible que si ladite nouvelle correspondance électronique est conforme auxdites règles de gestion.

Avantageusement, pour chaque opération de correspondance électronique dont la valeur probante doit être évaluée, au moins un des serveurs de composition, de commutation, de transmission, d'archivage et d'éditique reçoit du serveur de domiciliation un nombre de jetons de certifications déterminé par le type de ladite opération, lesdits jetons lui étant transmis par le serveur de certification.

Avantageusement, le serveur de certification ne délivre un certificat de valeur probante à l'utilisateur expéditeur que si et quand il a reçu du serveur de domiciliation, avant l'expiration d'un délai paramétrable, la totalité des jetons qu'il a émis, ledit retour attestant de la bonne exécution par lesdits serveurs des opérations spécifiées par le serveur de certification pour le type de l'opération de correspondance objet du certificat de valeur probante. Avantageusement, les serveurs qui réalisent des fonctions de composition, de commutation et de transmission appartiennent à un premier groupe de serveurs connectés entre eux par un réseau local de communication et s'échangent des données par un protocole de type Pass File. Avantageusement, les serveurs qui réalisent des fonctions d'archivage et d'éditique limitées à un ressort territorial appartiennent à un deuxième groupe de serveurs connectés au réseau local des serveurs du premier groupe par un réseau étendu de communication et échangent des données avec ledit réseau par un protocole de type Switch Out.

La présente invention divulgue également un procédé selon la revendication 21 de correspondance électronique sécurisée entre au moins un utilisateur expéditeur et au moins un utilisateur destinataire, ledit procédé comprenant au moins une étape de connexion à un serveur de domiciliation de correspondances électroniques, au moins une étape de composition desdites correspondances, et au moins un étape de connexion du serveur de domiciliation à un serveur de certification de correspondances électroniques, ladite étape de composition générant, pour chaque opération de correspondance à valeur probante, au moins deux spécimens ainsi que deux originaux certifiés à valeur probante par ledit serveur de certification, ledit procédé étant caractérisé en ce qu'un des spécimens est traité pour être envoyé au destinataire de l'opération de correspondance après que ladite opération a été validée par l'utilisateur expéditeur au vu de l'autre spécimen mis à sa disposition sur ledit serveur de domiciliation.

L'invention offre également l'avantage de permettre la vérification chez chaque opérateur impliqué dans le processus d'exécution d'une opération de correspondance électronique sécurisée qu'une correspondance expédiée est reçue au bout d'un intervalle de temps choisi. Egalement, grâce à l'utilisation de coupons de gestion attachés à un document appartenant à une suite de gestion documentaire, il est possible de satisfaire aux critères d'appariement et d'adossement prescrits par les auditeurs qui doivent certifier les transactions effectuées de manière dématérialisée. En outre, dans un mode de réalisation privilégié où les opérations sont regroupées dans un centre de services partagés, les communications peuvent s'exécuter sur un réseau local sans protocole à haute sécurité comme c'est le cas des opérations qui transitent sur un réseau entre centres de services distants. Le coût des communications en est grandement réduit.

Dans plusieurs modes de réalisation, l'invention permet également de réaliser un archivage dont la confidentialité est préservée par chiffrement des documents qui permettent, dans certaines conditions, à l'utilisateur d'avoir lui-même un accès local aux documents originaux tout en préservant à la fois le caractère original des documents et une possibilité d'accès des autorités judiciaires auxdits documents.

L'invention sera mieux comprise et ses différentes caractéristiques et avantages ressortiront de la description qui suit de plusieurs exemples de réalisation et de ses figures annexées dont :
- La figure 1 représente l'architecture simplifiée d'un système de correspondance électronique sécurisée dans un mode de réalisation de l'invention;
- La figure 2 représente les liens entre les différents acteurs d'un système de correspondance électronique sécurisée dans un mode de réalisation de l'invention;
- La figure 3 représente les différents types de session dans lesquels sont mise en œuvre les processus d'exécution d'opérations de correspondances électroniques sécurisées dans un mode de réalisation de l'invention ;
- La figure 4 représente un organigramme des traitements pour mettre en œuvre les processus d'exécution d'opérations de correspondances électroniques sécurisées dans un mode de réalisation de l'invention ;
- La figure 5 définit les jetons de certification utilisés par les traitements pour mettre en œuvre les processus d'exécution d'opérations de correspondances électroniques sécurisées dans un mode de réalisation de l'invention;
- La figure 6 représente une vue fonctionnelle d'un mécanisme d'ampliation dans un mode de réalisation de l'invention;
- La figure 7 illustre le processus d'utilisation des coupons de gestion dans une suite de correspondances de gestion dans un mode de réalisation de l'invention ;
- La figure 8 représente l'architecture d'un centre de services partagés dans un mode de réalisation de l'invention ;
- La figure 9 représente l'organigramme fonctionnel d'un procédé de chiffrement d'un document à archiver avec séquestre de la clé de chiffrement ;
- La figure 10 représente l'organigramme fonctionnel d'un procédé de chiffrement d'un document à archiver sans séquestre de la clé de chiffrement ;
- La figure 11 représente l'organigramme fonctionnel d'un procédé de chiffrement d'un document à archiver avec séquestre de la clé de chiffrement qui préserve un accès local de l'utilisateur au document archivé.

Sur les figures et dans la description, les numéraux désignent indifféremment, sauf lorsque une indication contraire est donnée, des prestataires ou opérateurs ou bien des serveurs qu'ils utilisent pour effectuer les opérations utiles ou nécessaires à la mise en œuvre de l'invention.

Dans la description, les figures et les revendications, les sigles et abréviations qui figurent dans le tableau ci-dessous ont les significations qui y sont indiquées, à moins qu'une signification différente soit précisée plus loin dans la description.

| **Sigle** | **Signification** |
|---|---|
| ACK | Acquittement |
| ANN | Serveur Annuaire |
| AR | Accusé de Réception |
| ARC | Archivage |
| BPG | Bureau Privé de Gestion |
| CCB | Convention de Correspondance Bilatérale |
| CCC | Compte de Correspondance Consolidé |
| CCU | Convention de Correspondance Universelle |
| CMT | Commutation |
| COL | Chambre d'Ordonnancement Légal |
| CSS | Code Secret Sécurisé |
| DES | Destinataire |
| DOC | Document |
| DUP | Duplicata |
| EDI | Editique |
| ERP | Enterprise Resource Planning (ou logiciel de gestion des ressources d'une entreprise) |
| EXP | Expéditeur |
| FDS | Fichier de Données Structuré |
| FGS | Fichier de Gestion Structuré |
| FIO | Fichier d'Ordre |
| FPT | Fichier Poste |
| H1 | Habilitation de remise |
| H2 | Habilitation de validation d'envoi |
| H3 | Habilitation de validation de réception |
| H4 | Habilitation de consultation |
| H5 | Habilitation de remise d'archivage |
| H6 | Habilitation de validation d'archivage |
| J | Jeton |
| LRAR FS | Lettre Recommandée avec Accusé de Réception en Fichier Structuré |
| MCIS | Matrice de Connectivité Inter Services |
| MVPD | Matrice de Valeur Probante Documentaire |
| OPEM | Opérateur Mutualisé |
| OPEN | Opérateur National |
| OPET | Opérateur de Traitement |
| OPET-ARC | Opérateur d'archivage |
| OPET-CMT | Opérateur de commutation |
| OPET-COMP | Opérateur de composition |
| OPET-EDI | Opérateur tiers d'éditique |
| OPET-TRANS | Opérateur de transmission |
| OPT | Tableau de correspondance d'un opérateur légal |
| ORI | Original |
| PF | Pass File (transfert de fichier inter prestataires en local) |
| PP | Proposition de Paiement |
| PRN | Fichier d'impression |
| PSC-COR | Prestataire de Services de Certification |
| PSCE/HD | PSCE d'Horodatage |
| PSCE/SE | PSCE de Signature Electronique |
| PSD | Prestataire de Services de Domiciliation |
| PVE | Procès Verbal d'Expédition |
| PVR | Procès Verbal de Réception |
| SPE | Spécimen de document ou d'AR |
| SSC | Shared Services Centre |
| SWO | Switch Out (transfert inter prestataires distants) |
| UTIL | Utilisateur d'un service de correspondance électronique |
| VERS | Versions documentaires |

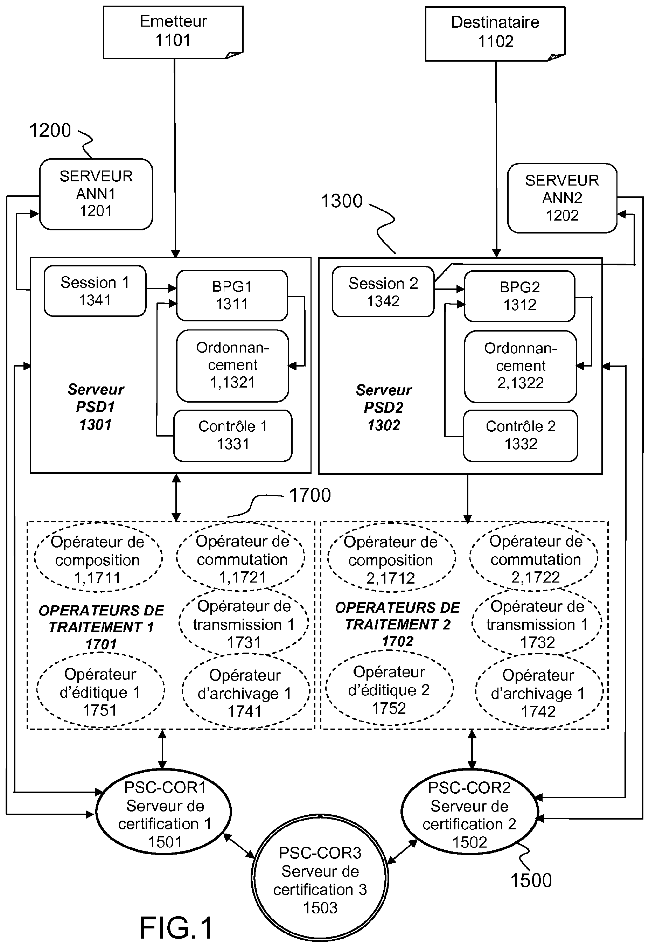

La figure 1 représente l'architecture simplifiée d'un système de correspondance électronique sécurisée dans un mode de réalisation de l'invention.

La dématérialisation des échanges de documents ou correspondances répond à un objectif de gain de productivité. En particulier, le gain potentiel résultant d'une dématérialisation des factures en France a été chiffré à 2% du PIB, soit plus de 40 milliards d'Euros. Cependant, le cahier des charges à respecter pour que cette dématérialisation soit conforme aux prescriptions légales et réglementaires impose la vérification de l'identité de l'émetteur du document et de l'intégrité dudit document. Or, la dématérialisation de la production de millions de documents suppose la mise en place de véritables chaînes industrielles pour produire lesdits documents.

Comme illustré sur le bas de la figure 1, de nouveaux métiers d'opérateurs de traitement (OPET) des documents ou correspondances électroniques 1700 se sont donc créés, dont les principaux sont les opérateurs de composition, les opérateurs de transmission, les opérateurs d'archivage, les opérateurs de commutation bilatérale. Les opérateurs de composition assemblent les documents à partir de fonds de page et de fichiers de données. Les opérateurs de transmission réalisent le routage, postal ou électronique, des documents. Les opérateurs d'archivage conservent les documents pour le compte des expéditeurs ou des destinataires, sous une forme originale ou de copie. Les opérateurs de commutation documentaire enregistrent en partie double les mouvements sur les comptes de correspondance de chaque utilisateur et opérateur de manière à pouvoir vérifier qu'au bout d'un temps paramétrable toute correspondance émise a sa contrepartie en réception. Dans la majorité des cas, l'existence de la contrepartie devra être vérifiée au maximum dans la journée, faute de quoi le courrier expédié sera rejeté par le système.

Il est bien entendu envisageable que tout ou partie de ces opérations de traitement soit réalisé par un même opérateur, par exemple dans un centre de services partagé comme nous le verrons plus loin dans la description. Mais dans des systèmes de correspondance électronique ayant vocation à couvrir des zones géographiques étendues et des systèmes juridiques différents, il est probable qu'au moins deux fonctions doivent être exécutées localement : la fonction d'archivage, pour des raisons légales ou de politique publique et la partie de la transmission relative à la communication multi canal qui implique l'envoi de fax, l'impression, la mise sous pli et le routage postal qui sont coûteux s'ils sont effectués à longue distance.

Or, pour que la valeur probante d'un document électronique soit équivalente à celle d'un document écrit sur support papier, il est nécessaire de pouvoir garantir tout au long de la vie du document l'identité de l'auteur et l'intégrité de son document. Cette garantie ne peut être établie que si la chaîne de production et d'échange de documents est une chaîne de confiance.

Est représentée sur la figure 1 une architecture simplifiée en mesure d'établir cette chaîne de confiance. Cette architecture comprend quatre types d'entités organisationnelles, chaque entité gérant des serveurs informatiques, bases de données et logiciels propres à chaque type, lesdites entités étant reliées entre elles par un ou plusieurs réseaux de communication qui peuvent être le réseau public ou des réseaux privés sur lesquels peuvent être mis en œuvre des protocoles de communication standard ou spécialisés:
- Un premier type d'entité est constitué par des ensembles d'utilisateurs « UTIL » émetteurs 1101 et destinataires 1102 de correspondances, chaque ensemble d'utilisateurs étant réuni par une cause faisant que certaines de leurs données d'identification sont disponibles sur un même serveur Annuaire ou ANN 1200, 1201, 1202;
- Un deuxième type d'entité est constitué par des « Prestataires de Services de Domiciliation de correspondance», PSD, 1300, 1301, 1302 ;
- Un troisième type d'entité est constitué par les « Opérateurs de Traitement » (OPET) de correspondances électroniques, 1700, 1701, 1702 ;
- Un quatrième type d'entité est constitué par des « Prestataires de Services de Certification de Correspondance» (PSC-COR), 1500, 1501, 1502.

Nous explicitons d'abord les entités du premier type. Pour faciliter la compréhension, l'architecture est présentée avec deux utilisateurs, un utilisateur expéditeur 1101 et un utilisateur destinataire 1102 appartenant à deux annuaires ANN différents, 1201 et 1202. L'architecture est donc dupliquée sur la figure 1. Le système de l'invention est configuré pour gérer les correspondances électroniques entre ces utilisateurs, comme explicité plus loin dans la description.

Des ensembles d'utilisateurs regroupés sur un même Annuaire peuvent être constituées pour des raisons diverses :
- Un tel ensemble peut être constitué par tous les salariés d'une entreprise de par le monde (ou par certaines catégories de ces salariés : cadres dirigeants ; chercheurs d'une discipline donnée ; commerçants chargés de la vente d'un produit donné, etc...) ;
- Les administrés d'une collectivité territoriale peuvent naturellement constituer un tel ensemble ;
- Une grande entreprise peut vouloir agréger autour d'elle ses fournisseurs en mettant à leur disposition un extranet leur donnant accès à des informations réservées et leur imposant par ailleurs de fournir leurs documents (propositions, factures, manuels utilisateurs, etc...) selon certaines normes ;
- Une chaîne de magasins généralistes ou spécialisés, une banque de détail, offrent en général à leurs clients l'accès à espace réservé sur leur site internet ;
- Un fournisseur d'accès Internet, qui fournit en général un service de messagerie standard.

A certains égards, ces ensembles d'utilisateurs réunis par un point commun constituent des communautés. On voit que cette notion peut avoir des acceptions différentes selon le contexte : une communauté peut regrouper des personnes physiques et des personnes morales, elles-mêmes représentées par des personnes physiques qui doivent avoir les pouvoirs pour ce faire, à partir du moment où les documents produits engagent la personne morale que cette personne physique représente. Il résulte également de la nature même des communautés que nous venons de décrire qu'une même personne physique et une même personne morale peuvent appartenir à plusieurs communautés différentes. Une communauté définit des règles de gestion pour enregistrer ses adhérents qui peuvent devenir utilisateurs des services de la communauté et, éventuellement, pour que lesdits membres puissent inviter des personnes extérieures à leur communauté à les rejoindre. La procédure d'enregistrement fait nécessairement intervenir des échanges non électroniques. En résumé, il s'agit de vérifier les attributs d'identification, d'adressage et d'authentification du futur utilisateur. Un utilisateur enregistré a donc une identité vérifiée, des adresses postales et électroniques validées et au moins un moyen d'authentification, ces différents attributs étant décrits de manière détaillée dans la suite de la description. Ces données sont stockées dans une base de données qui constitue, dans sa totalité ou en partie, un Annuaire ANN, 1200, 1201, 1202. Pour protéger les données nominatives, il peut être nécessaire de gérer un certain nombre de données de la base (notamment les informations relatives aux modes d'authentification), dans un espace de stockage logiquement voire physiquement distinct de l'Annuaire qui doit être accessible sur le réseau de la communauté.

Ces entités du premier type ne sont pas spécifiques du domaine de la correspondance électronique. Leur objectif premier est différent (économique, social, etc...), le service de correspondance étant accessoire par rapport à cet objectif premier.

En revanche, les Prestataires de Services de Domiciliation de correspondance PSD, 1300 ont pour objectif principal de fournir ce service à leurs clients ou usagers. Ces prestataires PSD mettent à la disposition de leurs clients un Bureau Privé de Gestion (BPG) 1310 qui constitue une zone propre à chaque utilisateur (ou éventuellement à chaque entité, lorsque l'adhérent de la Communauté est une entreprise). C'est dans ce BPG que chaque utilisateur expéditeur remet les correspondances qu'il souhaite envoyer, selon des modalités qui seront détaillées plus loin dans la description, et que sont stockées les correspondances effectivement envoyées et reçues dans un Compte de Correspondance Consolidé (CCC). Lesdites modalités dépendent du type de correspondance. Dans un mode de réalisation de l'invention, 20 types de correspondances, dites universelles, sont définis, entre lesquelles l'utilisateur expéditeur peut choisir. A chaque type de correspondance universelle, est associé un processus d'établissement de la valeur probante. C'est dans le BPG que l'utilisateur désigne les OPET qui traiteront ses correspondances. C'est également dans le BPG que l'utilisateur expéditeur désigne les destinataires de ses correspondances. Les prestataires PSD réalisent également :
- une fonction 1320 de préparation et d'ordonnancement des opérations de correspondance électronique, qui consiste à répartir les traitements de la correspondance entre les opérateurs ;
- une fonction 1330 de contrôle des opérations réalisées, comme on le verra dans la présente description.

Dans la pratique, des entités du premier type peuvent souhaiter déployer des services de domiciliation de correspondance électronique pour leurs clients. Dans ce cas, les entités du 1^{er} et du 2^{ème} type constitueront une entité unique. Cela sera également le cas si des PSD décident d'offrir un accès direct à un annuaire qui leur est propre qui sera d'autant plus important que la commercialisation de leur service sera un succès.

Les entités du troisième type sont constituées par les OPET. Des OPET par défaut peuvent être proposés par les PSD. Les OPET doivent être agréés par ledit PSD et se conformer aux procédures prescrites. Un utilisateur qui gère des flux importants de correspondance peut cependant choisir des OPET différents par catégorie de flux ou par catégorie de destinataires. Les serveurs de composition, de commutation, de transmission et d'archivage qui sont représentés sur la figure 1 peuvent tout à fait être dans des lieux géographiques différents, à la condition de pouvoir communiquer entre eux selon les modalités prescrites par le gestionnaire du système de l'invention, détaillées plus loin dans la description. On verra par ailleurs que la question de savoir si un OPET exécute des prestations dans les frontières d'un seul pays (et donc potentiellement d'un seul PSC-COR, comme expliqué plus loin), peut avoir son importance. La pression sur les coûts des prestations de services de ce type pousse déjà à une centralisation des opérations dans des centres de services partagés de taille importante (Shared Service centres ou SSC) ayant vocation à commercialiser leurs services dans plusieurs pays. Dans ce cas, un même OPET sera soumis à des politiques de certification différentes par des PSC-COR différentes. On parlera alors dans la suite de la description d'Opérateur de Traitement Mutualisé ou OPEM. Les OPET qui ne sont soumis qu'à une seule politique de certification seront qualifiés d'OPEN ou Opérateurs de Traitement Nationaux.

Les entités du quatrième type sont constituées par les PSC-COR qui gèrent des serveurs de certification 1500. Les PSC-COR ont la responsabilité finale de garantir la valeur probante des correspondances électroniques qui sont échangées dans le système de l'invention. Cette valeur probante étant définie par des cadres législatifs et réglementaires nationaux, il est avantageux d'envisager que la responsabilité d'un PSC-COR soit établie dans un cadre national, ou au moins conforme à celui de chaque législation nationale. C'est pour cette raison qu'il faut envisager un ou plusieurs PSC-COR d'un type particulier, ayant la responsabilité d'assurer l'interopérabilité juridique des PSC-COR de premier niveau. C'est une architecture de ce type qui est représentée sur la figure 1. On peut cependant envisager une architecture à plus de deux niveaux d'PSC-COR sans sortir du cadre de la présente invention.

On peut également envisager qu'un PSC-COR effectue des fonctions de PSD. Au plan organisationnel, cela ne pose pas de problème particulier car les deux entités ont un rôle d'enregistrement des utilisateurs (PSD), d'ordonnancement des opérations des OPET (PSD) et de contrôle (PSC-COR) desdites opérations et coopèrent pour atteindre la valeur probante la plus élevée. Au plan technique, l'architecture prévoira en règle générale de manière privilégiée deux serveurs distincts exerçant chacun une partie des fonctions du système.

Chaque PSC-COR doit établir des liaisons avec des opérateurs d'un type particulier, qui dans un mode de réalisation de l'invention sont de deux types, englobés dans une catégorie générale de Prestataires de Services de Certification Electronique (PSCE), qui ne sont pas spécifiques des opérations de correspondance électronique sécurisée:
- Un premier type de PSCE est constitué par les PSCE de Signature Electronique (PSCE-SE) ; la signature électronique fait généralement appel à des techniques de cryptographie, qui nécessitent pour avoir valeur probante, une autorisation délivrée par des autorités gouvernementales ; un PSCE-SE gère une base de données des clés de chiffrement utilisées pour la signature électronique ; il doit être en mesure de tenir à jour les clés répudiées ou révoquées (par leur détenteur ou une autorité habilitée, notamment en cas d'utilisation frauduleuse ou douteuse) pour pouvoir garantir qu'une clé utilisée à un moment donné est valide ; le serveur de certification interroge ladite base de données du PSCE-SE soit à chaque fois qu'une signature électronique est utilisée dans le système, soit par lots à des fréquences réalisant un compromis entre la fiabilité du système et la charge du système informatique;
- Un deuxième type de PSCE est constitué par les PSCE d'Horodatage (PSCE-HD) ; l'horodatage permet de donner une date certaine, calée sur une horloge atomique, aux documents qui sont soumis à cette procédure ; les PSCE-HD doivent également disposer d'un agrément ; le serveur de certification envoie une requête d'horodatage au PSCE-HD d'un condensat du document à horodater et le certificat d'horodatage qu'il reçoit en retour est scellé avec le document ;

On peut tout à fait envisager, dans le cadre du système de l'invention, que certaines des fonctions indiquées ci-dessus soient effectuées par un PSC-COR, à la condition que le PSC-COR dispose des agréments nécessaires. Cependant, la chaîne de confiance aura une valeur probante supérieure si les PSC-COR et PSCE des deux types sont indépendants les uns des autres.

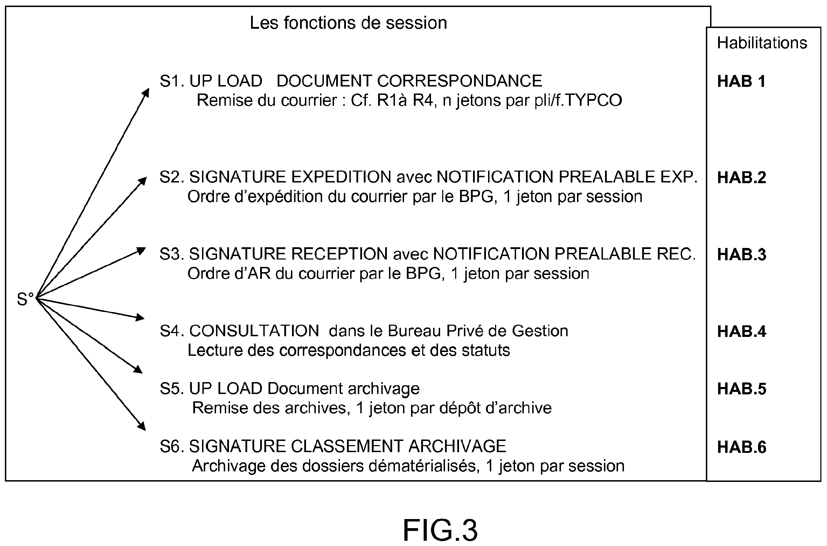

L'accès des utilisateurs expéditeurs ou destinataires au système s'effectue par un mécanisme de session qui comprend des procédures d'authentification dont la complétude dépend du type d'opérations à effectuer, comme cela sera détaillé en commentaire à la figure 3. Une session est initiée avec un serveur d'un PSD 1200 par un utilisateur expéditeur 1101 qui souhaite expédier des correspondances électroniques. Elle peut être initiée également par un utilisateur destinataire 1102 qui souhaite prendre connaissance d'une correspondance dont il a reçu notification et en accuser réception. Plusieurs types de sessions peuvent être définis. Une session regroupe plusieurs processus permettant d'exécuter les opérations de correspondance électronique et leur certification quand leur exécution est conforme.

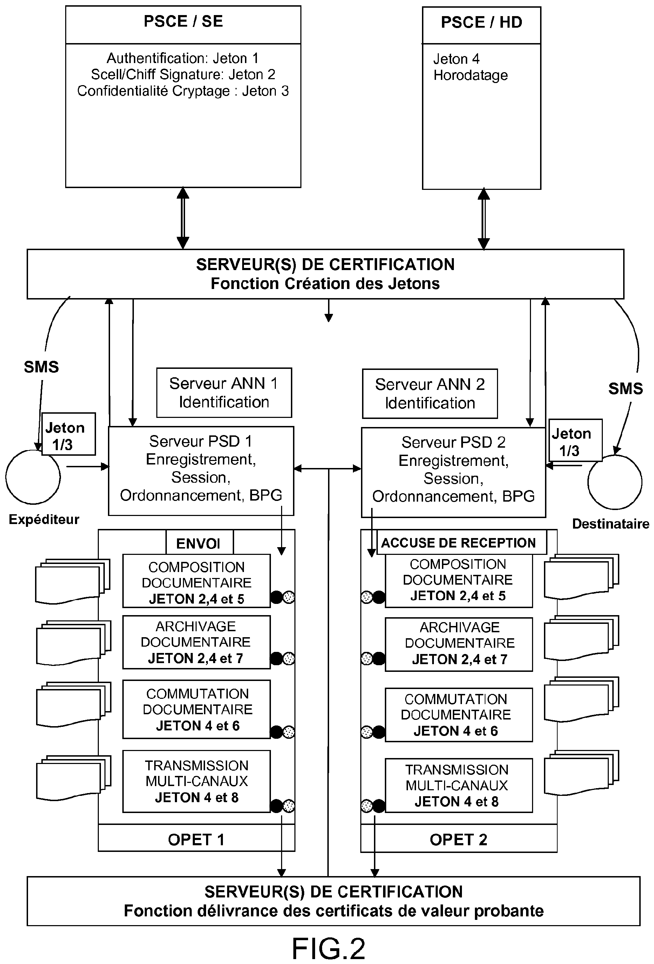

La figure 2 représente les liens entre les différents acteurs d'un système de correspondance électronique sécurisée dans un mode de réalisation de l'invention.

Dans un des modes de réalisation de l'invention, une deuxième caractéristique importante d'un système pour mettre en œuvre l'invention est de prévoir la création pour chaque type de correspondance d'un ensemble de jetons de certification. Dans l'exemple de la figure 2, on peut identifier les principaux jetons propres à chacune des étapes du processus de production d'une correspondance électronique sécurisée. Ces jetons sont créés par le serveur de certification au cours des différentes sessions et envoyés aux différents acteurs de la chaîne de traitement des correspondances électroniques traitées lors de la session (PSD et OPET). Certains jetons doivent être validés par les PSCE. Les jetons sont renvoyés au PSC-COR lorsqu'ils ont reçu leur dernière validation. Lorsqu'il a recueilli tous les jetons en provenance de tous les acteurs et vérifié la complétude de couverture des opérations de traitement de la correspondance, le serveur de certification délivre un certificat de valeur probante au serveur de gestion.

La figure 3 représente les différents types de session dans lesquels sont mis en œuvre les processus d'exécution d'opérations de correspondances électroniques sécurisées dans un mode de réalisation de l'invention.

Dans un des modes de réalisation de l'invention, on définit un module 1341, 1342 de gestion de sessions de correspondance électronique sécurisée qui permet d'établir six types de sessions qui sont brièvement décrites ci-dessous.

La session de type S₀ est un point d'entrée commun à tous les autres types de session. Elle permet d'authentifier non seulement l'utilisateur mais l'ensemble des acteurs qui vont intervenir dans la session à venir (type S₁ à S₆). Le nombre et la nature des authentifications à opérer au stade de la session S₀ dépendront donc du type de la session à venir que l'utilisateur devra indiquer lors de son login.

La session de type S₁ permet à un utilisateur expéditeur de remettre dans son BPG un ensemble de documents qu'il veut transformer en correspondance électronique. Une session de ce type gère en particulier le choix du chemin de routage électronique et la création et la circulation des jetons de certification en fonction du type de correspondance.

La session de type S₂ permet à l'expéditeur de valider par sa signature ou celle d'un mandataire l'expédition d'une correspondance électronique après composition.

La session de type S₃ permet à un destinataire de valider par sa signature ou celle d'un mandataire la réception d'une correspondance électronique et d'expédier, le cas échéant, un accusé de réception, après notification préalable aux destinataires de l'arrivée d'une correspondance qui leur est destinée.

La session de type S₄ permet à un utilisateur expéditeur ou destinataire d'accéder à son BPG pour prendre connaissance des correspondances envoyées ou reçues, des encours (brouillons, statuts intermédiaires, envois non encore validés, notifications de réception non soldées, ...) ainsi que, éventuellement, pour consulter les différentes règles de gestion de l'application de gestion des correspondances électroniques propres à un utilisateur ou un ensemble d'utilisateurs, les mandats de gestion et les conventions de correspondance universelle ou les conventions de correspondance bilatérales.

La session de type S₅ permet à un utilisateur de remettre dans son BPG des documents à archiver.

La session de type S₆ permet à un utilisateur de valider par sa signature ou celle d'un mandataire l'archivage des dossiers remis et donc de déclencher ledit archivage en classant les correspondances en données électroniques. A chaque type de session correspond un type d'habilitation (type H₁ à H₆, respectivement pour les sessions de type S₁ à S₆) dont le champ et les spécifications sont fonction du type d'opérations à effectuer dans le type de session pour laquelle l'habilitation est délivrée.

Des sessions d'autres types peuvent être ajoutés (par exemple, une session spécifique à un processus de validation de factures telle qu'une proposition de paiement) sans que le système les mettant en œuvre sorte nécessairement du champ de l'invention qui ne porte pas sur un ensemble déterminé de sessions mais sur des procédés mis en œuvre dans tout ou partie des dites sessions.

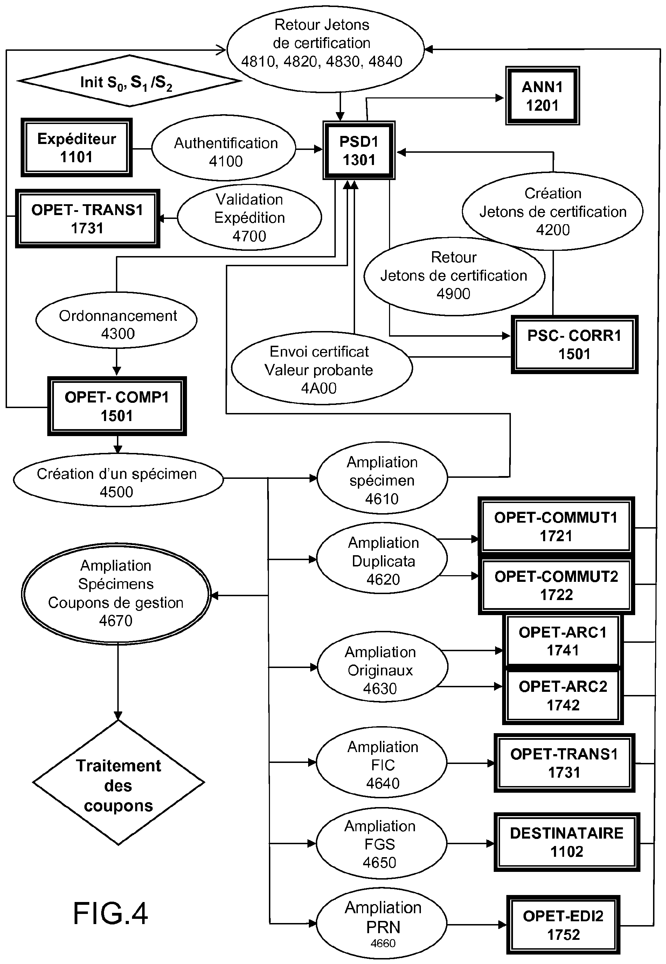

La figure 4 représente un organigramme des traitements pour mettre en œuvre les processus d'exécution d'opérations de correspondances électroniques sécurisées dans un mode de réalisation de l'invention.

Un certain nombre de principes permettent de sécuriser la valeur probante de correspondances électroniques dématérialisées. Certains tiennent aux constituants de la chaîne de confiance, c'est-à-dire à la fiabilité des attributs de confiance des acteurs de cette chaîne (utilisateurs expéditeurs et destinataires, opérateurs de traitement et prestataires de services de domiciliation et de certification des correspondances. Ces principes ont été brièvement décrits ci-dessus et font l'objet de la demande de brevet n° 0956819 déposée le 30 septembre 2009. La vérification des attributs de confiance s'effectue au cours de processus spécifiques exécutés au cours de sessions de correspondance électronique sécurisée (Init S₀, S₁, S₂). Une session comporte une authentification forte, 4100 de l'utilisateur. D'autres principes ou règles de gestion tiennent à la sécurisation des processus pour garantir la traçabilité de bout en bout des opérations et l'intégrité des documents qui s'échangent, le tout dans une architecture capable de traiter des millions de documents par jour. Dans un mode de réalisation de l'invention, ces règles de gestion sont au nombre de quatre :
- L'exécution d'une opération de correspondance fait l'objet d'un compte-rendu d'exécution à celui qui l'a ordonnancée ;
- Un original de correspondance électronique est unique chez chacun des titulaires légitimes de ladite correspondance;
- Toute opération de correspondance chez un utilisateur est comptabilisée dans son compte de correspondance consolidé et a sa contrepartie dans le compte de correspondance consolidé d'au moins un autre utilisateur (principe de bilatéralité);
- Toute opération de correspondance traduisant une opération de gestion est causée, c'est-à-dire trouve son fondement dans une opération de gestion antérieure ou une habilitation.

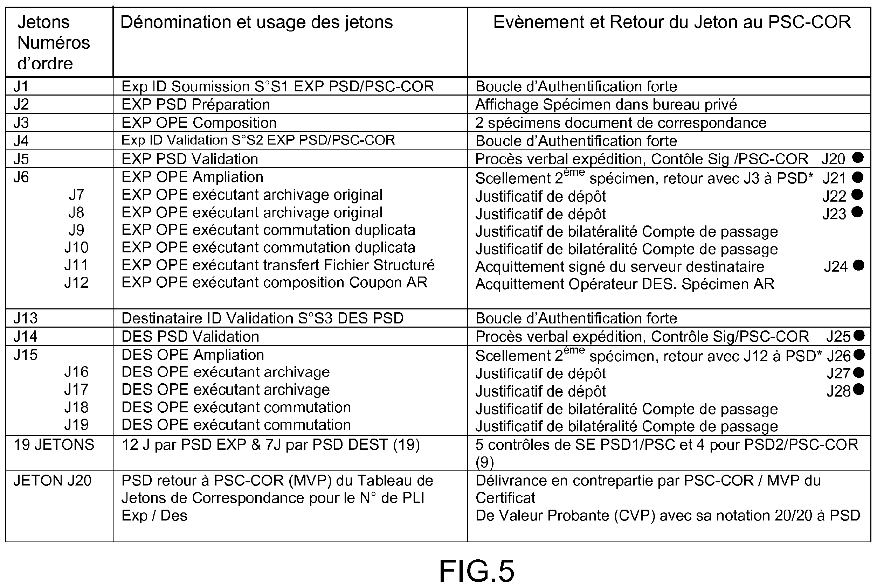

Le 1^{er} principe permet de s'assurer que tous les acteurs de la chaîne de confiance, non seulement disposent des accréditations nécessaires, mais encore les utilisent conformément à leur objet défini par le cahier des charges du prestataire de service qui est amené à délivrer une certification de la valeur probante de l'opération de correspondance (PSC-COR1). Le moyen privilégié pour que les opérateurs et prestataires rendent compte des opérations qu'ils exécutent est un jeton de certification. Les caractéristiques de ces jetons de certification sont détaillées en commentaire à la figure 5. Les jetons sont créés par le serveur PSC-COR1, 1501 au cours d'un processus 4200. A l'issue des opérations qui sont décrites par la suite, les OPET font retour des jetons de certification de leurs opérations au PSD1 au cours de plusieurs processus 4810, 4820, 4830, 4840.... Lorsque le PSD1 a récupéré tous les jetons de certification relatifs à une ligne de correspondance, il fait retour desdits jetons au PSC-COR1 sein d'une matrice de valeur probante documentaire au cours d'une processus 4900. Enfin, le PSC-COR1 émet un certificat de valeur probante qu'il transmet au PSD1 au cours d'un processus 4A00.

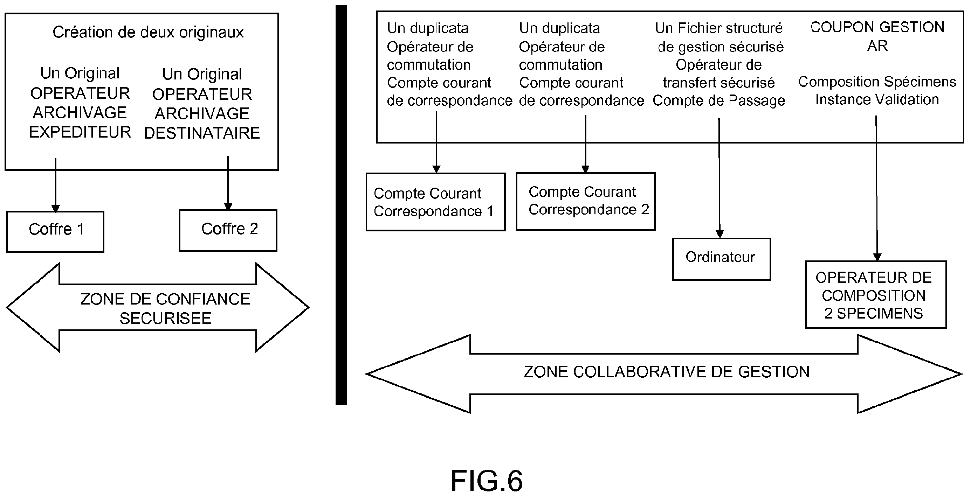

Le 2^{ème} principe conduit à créer plusieurs versions d'un même document créées à partir d'un spécimen, dont une seule par détenteur aura le caractère d'original et sera conservée en archivage par un tiers de confiance spécialisé OPET-ARC1, 1741. Les versions de travail qui circulent ne sont que des duplicata. La génération de spécimens, de duplicata et d'originaux est une opération d'ampliation 4610, 4620, 4630. Elle est réalisée par un opérateur de composition OPET-COMP1, 1711. Ces opérations, l'utilisation des versions et les règles de gestion qui s'appliquent à celles-ci sont expliquées de manière détaillée en relation avec la figure 6. Comme on le verra, l'ampliation permet également la génération notamment de fichiers de gestion structurés (FGS), de fichiers de transmission et d'éditique.

Le 3^{ème} principe est décrit de manière détaillée dans le brevet FR2900011. Ce principe de bilatéralité implique que tout mouvement de correspondance est considéré comme une écriture comptable qui ne peut être passée dans un compte de correspondance (qui est comme un compte comptable en partie double) que si sa contrepartie est enregistrée dans un autre compte de correspondance; provisoirement, une correspondance peut transiter par un compte d'attente ; l'écriture ne sera pas passée si la contrepartie n'est pas parvenue au bout d'un temps paramétrable. Dans un mode privilégié, il est mis en œuvre dans un système selon l'invention en prévoyant qu'un opérateur de commutation OPET-CMT1, 1721 tient un compte de correspondance bilatérale (CCB) de l'expéditeur et y inscrit un duplicata de chaque correspondance au cours d'un processus 4620, un 2^{ème} duplicata étant inscrit dans le compte de correspondance du destinataire par l'opérateur de commutation du destinataire OPET-CMT2, 1722.

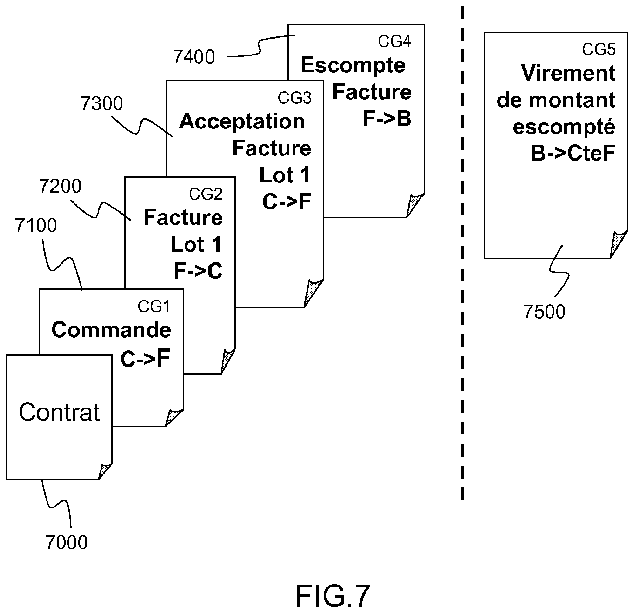

Le 4^{ème} principe est décrit de manière détaillée dans la demande de brevet FR2911982. Dans un mode privilégié, l'OPET-COMP1, 1711 crée des coupons de gestion au cours d'un processus 4400. La gestion des coupons de gestion dans un mode amélioré en combinaison avec les processus de suivi des versions et des jetons de certification est décrit plus en détail dans en commentaire à la figure 7.

Par ailleurs, le PSD effectue l'ordonnancement de toutes les opérations de correspondance électronique par les OPET au cours d'un processus 4300.

La figure 5 définit les jetons de certification utilisés par les traitements dans un mode de réalisation de l'invention ;
Les jetons qui sont définis pour la mise en œuvre de l'invention sont des jetons de certification dont la circulation en liaison avec celle des documents objet de l'opération de correspondance électronique permet de valider la réalisation de chacune des sous opérations en conformité avec le cahier des charges défini par le ou les PSC-COR qui interviennent dans l'opération de correspondance électronique pour faire respecter la conformité globale et bilatérale.

Dans le mode de réalisation décrit, 28 jetons de certification ont été définis. Selon le découpage du processus de production et de transmission des documents, il peut être avantageux de prévoir davantage ou moins de jetons. La définition des jetons illustrée par la figure n'est donc en aucune manière limitative. Chaque type de correspondance (TYPCO) dans la nomenclature universelle possède un nombre défini et caractéristique de jetons qui déterminent sa valeur probante maximale sur l'échelle de notation des correspondances définie par le PSC-COR.

Le tableau de la figure indique pour chaque jeton sa dénomination et son usage, ainsi que l'événement qui déclenche un jeton retour.

Chaque type de correspondance a une empreinte particulière qui établit sa spécificité, qui préserve cette spécificité sur un nombre important d'exemplaires produits, et qui permet d'effectuer tous les contrôles pour supprimer les correspondances non conformes, et dans les phases intermédiaires, les anomalies.

L'empreinte permet pour chaque « émission » de correspondance d'administrer la preuve légale de correspondance sur des critères de sécurité juridique et informatique.

A titre d'exemple, nous prenons l'empreinte de la lettre recommandée avec accusé de réception pour un formulaire commercial.

Cette lettre recommandée figure dans la nomenclature TYPCO et bénéficie d'une notation de la valeur probante et donc d'une certification par le Prestataire de Services de Certification PSC-COR.

Nous allons décrire dans cet exemple ce que détermine le PSC-COR pour ce TYPCO afin de pouvoir mesurer la valeur probante et, en cas de litige, administrer la preuve de ladite valeur probante.

Dans la nomenclature, la Lettre Recommandée AR Signée en Fichier Structuré (LRAR FS) a une notation et donc une valeur probante de 20 sur 20. La notation de la LRAR FS est établie sur plusieurs critères qui sont matérialisés par des jetons. La dématérialisation à valeur juridique certaine est fondée sur deux catégories de jetons : les jetons de domiciliation et les jetons d'ampliation.

Les jetons de domiciliation sont octroyés par le PSC-COR aux PSD pour :
- Justifier de l'identité numérique de chaque personne physique connectée en session :
   ∘ S∘-S₁ : « up-load » des données de correspondance
   ∘ S∘-S₂: validation des documents export
   ∘ S∘-S₃ : validation des documents import (AR)

Le PSD doit justifier de l'identité numérique forte avec un horodatage soit en faisant vérifier le certificat d'identité numérique de la personne en interrogeant son autorité de certification de signature électronique (PSCE-SE) par l'intermédiaire du PSC-COR, soit en utilisant un processus d'identification selon la demande de brevet n° 0956819 déposée le 30 septembre 2009 dans une session de type S₀.

C'est après cette vérification que PSC-COR délivre les jetons de certification nécessaires aux PSD, celui de l'expéditeur et ceux des destinataires.

Dans l'hypothèse où les couples Expéditeur / Destinataires (3 dans l'exemple de réalisation) n'ont pas de signature électronique et ont recours à une identification forte par boucle incluant un téléphone mobile telle que décrite dans la demande de brevet n° 0956819 déposée le 30 septembre 2009 il y aura donc :
- Pour le coté expéditeur :
   ∘ 1 jeton pour l'identification S∘-S₁ sur PSD EXP (type J1) ;
   ∘ 1 jeton pour l'identification S∘-S₂ sur PSD EXP (type J1) ;
   Donc 2 jetons côté Expédition sur PSD EXP
- Pour chaque destinataire (3 dans l'exemple de réalisation) :
   ∘ 1 jeton pour l'identification S∘-S₃ sur PSD DES (type J1) ;
   Donc 3 jetons côté Destinataire
   ∘ Pour 3 correspondances, on aura 2+3= 5 jetons
   ∘ Pour une seule correspondance bilatérale, on aura 2 +1= 3 Jetons
      1 Jeton ID S∘-S₁ Soumission (type J1);
      1 Jeton ID S∘-S₂ Validation Expédition (type J5);
      1 Jeton ID S∘-S₃ Validation Réception (type J14);
- Globalement, pour justifier de l'ordonnancement dont est chargé le PSD pour chaque N° ou pli de correspondance Expéditeur / Destinataire, d'une part le PSD de l'expéditeur, et d'autre part le PSD du destinataire, il existe au niveau de l'ordonnancement :
   ∘ Côté expéditeur, un Jeton de Préparation (type J2) pour le PSD avec un jeton de Composition (type J3) remis à l'opérateur de composition OPET-COMP, 1711 ;
   ∘ Côté expéditeur, un Jeton de Validation (type J5) pour le PSD avec un jeton d'Ampliation (type J6) remis à l'opérateur de composition OPET-COMP, 1711 ;
   ∘ Côté destinataire, un jeton de validation (type J14) pour le PSD avec un jeton d'ampliation (type J15) remis à son opérateur de composition.

Il y a donc pour chaque pli de correspondance un nombre fixe de jetons d'ordonnancement :
- PSD EXP 2 jetons : préparation (type J2), validation (type J5) ;
- OPE EXP 2 jetons : composition (type J3), ampliation (type J6) ;
- PSD DES 1 jeton : validation (type J14) ;
- OPE DES 1 jeton : ampliation (type J15).

Il y a par contre un nombre variable de jetons pour l'ampliation dont le chiffre exact est déterminé par la nomenclature des typologies de correspondance. Pour la Lettre Recommandée AR Signée en Fichier Structuré (LRAR FS) on dénombre les jetons variables suivants :
- Originaux (2), donc deux jetons (types J7, J8) qui seront utilisés par les tiers d'archivage OPET-ARC1, 1741 et OPET-ARC2, 1742 ;
- Duplicata (2), donc deux jetons (types J9, J10) qui seront utilisés par les tiers de commutation OPET-CMT, 1721 et OPET-CMT2, 1722 ;
- Fichier de Gestion Structuré (1), donc 1 jeton (type J11) qui sera utilisé par l'ERP du destinataire en lecture automatique univoque (Fichier structuré accompagné, d'une part, d'une liste récapitulative des mentions de gestion incorporées dans le fichier, et devant obligatoirement être intégrées dans l'ERP ou ordinateur destinataire , d'autre part d'une signature électronique expéditeur à vérifier à la réception par l'ordinateur destinataire);
- Coupons de gestion (n), donc des jetons (type J12) utilisés pour la composition de l'Accusé de Réception AR et des n-1 documents dérivés de la correspondance principale (il y a autant de jetons qu'il y a de coupon(s) de gestion créé(s) par une ou plusieurs ampliations successives).

S'il n'y a qu'un coupon de gestion destiné à l'AR (pas de document dérivé), il y a donc, dans cet exemple de réalisation, en tout 6 jetons pour les produits d'ampliation destinées à l'archivage (2) et à la commutation (2) des deux duplicata (mouvement de correspondance bilatéral), au transfert d'un fichier de gestion structuré (1), et au coupon de gestion AR (1).

Les processus exécutés dans cet exemple de réalisation peuvent être détaillés de la manière suivante :
- Côté PSD de l'expéditeur :
   ∘ Dès chargement de sa « table de jetons de correspondance » par pli ou N° de correspondance, le PSD Expéditeur doit envoyer les données nécessaires de chaque N°ou pli de correspondance au traitement de cette correspondance EXP/DEST chez l'opérateur documentaire désigné. avec un jeton de composition (type J3) ; le jeton de composition est retourné par l'opérateur à son PSD dès que les deux spécimens immatriculés, horodatés et scellés sont soumis à la validation en renvoyant avec le « jeton de composition » un des deux spécimens chez le PSD pour être soumis à l'approbation de l'expéditeur dans son BPG et à son ordre d'envoi ; un jeton justificatif de l'ordonnancement de la composition, appelé jeton de préparation (type J2), est tiré de la « table des jetons de correspondance » tenue par le PSD et est retourné au PSC-COR dès que l'un des deux spécimens figure dans le BPG de l'expéditeur et que le jeton de composition lui a été retourné avec les justificatifs d'immatriculation, composition, scellement, et horodatage ;
   ∘ Dès la validation de l'ordre d'expédition pour chaque N° ou pli de correspondance, signé juridiquement par l'expéditeur, le PSD Expéditeur, 1301 élabore un procès verbal d'expédition, signale la validation à l'opérateur de composition de l'expéditeur OPET-COMP1, 1711, et lui fournit tous les jetons nécessaires à l'ampliation (types J7 à J12) ; un jeton justificatif de l'ordonnancement de l'ampliation, appelé jeton de validation (type J5), est tiré de la « table des jetons de correspondance » tenue par le PSD, et il est retourné par le PSD au PSC dès que l'opérateur de composition à donné l'acquittement confirmant la réception des jetons nécessaires à l'ampliation ; cet acquittement est un message éventuellement accompagné de la fourniture d'un fichier de gestion structuré (FGS) qui pourra être introduit par le PSD dans le BPG de l'expéditeur pour enrichir sa base de données de gestion à partir de laquelle toutes les recherches indexées sont possible pour le N° de pli de correspondance ainsi traité ; le jeton d'ampliation ne sera retourné au PSD que lorsque l'opérateur de composition de l'expéditeur OPET-COMP1, 1711 aura réuni les preuves des ampliations, et envoyé les produits de ces ampliations aux autres opérateurs en disposant des justificatifs d'acquittement de leur part.
- Côté PSD du destinataire, il n'existe qu'une fonction d'ordonnancement qui permet de valider le spécimen de l'AR (coupon de gestion AR) et de faire exécuter par l'opérateur de composition du destinataire OPET-COMP2, 1712 les opérations d'ampliation qui conviennent:
   ∘ Dès la validation de l'avis de réception pour chaque N° ou pli de correspondance, signé juridiquement par le destinataire, le PSD du destinataire PSD2, 1302 élabore un procès verbal de réception, signale la validation à l'opérateur de composition de l'expéditeur OPET-COMP1, 1711 et lui fournit tous les jetons nécessaires à l'ampliation (types J15 à J19); un jeton justificatif de l'ordonnancement de l'ampliation, appelé jeton de validation (type J14), est tiré de la « table des jetons de correspondance » tenue par le PSD du destinataire, et est retourné par le PSD2, 1302 au PSC-COR2, 1502 dès que l'opérateur de composition du destinataire OPET-COMP2, 1712 a donné l'acquittement confirmant la réception des jetons nécessaires à l'ampliation ; cet acquittement est un message accompagné éventuellement de la fourniture d'un fichier de gestion structuré (FGS) qui pourra êtree introduit par le PSD2, 1302 dans le BPG du destinataire pour enrichir sa base de données de gestion à partir de laquelle toutes les recherches indexées sont possibles pour le N° de pli de correspondance reçu ; le jeton d'ampliation ne retournera au PSD2, 1302 que lorsque l'opérateur de composition OPET-COMP2, 1712 aura réuni les preuves de ces ampliations, envoyé les produits de ces ampliations aux autres opérateurs et reçu des justificatifs d'acquittement de leur part.

Les jetons J20 à J28 indiqués sur la figure sans commentaire ont les utilisations suivantes :

| | |
|---|---|
| - J20 Procès verbal | PSD EXP |
| - J21 Spécimen scellé DOC | OPE COMP EXP |
| - J22 archivage | OPE ARC EXP |
| - J23 archivage | OPE ARC DES |
| - J24 transfert signé | OPE TRANS EXP |
| - J25 Procès verbal | PSD DES |
| - J26 Spécimen scellé AR | OPE COMP DES |
| - J27 archivage | OPE ARC DES |
| - J28 archivage | OPE ARC EXP |

Ces jetons sont obtenus par le PSC-COR d'un PSCE-SE ou d'un PSCE-HD pour être utilisés soit par les PSD pour les procès-verbaux d'expédition (J20) et de réception (J25) soit par les différents OPET (J21 à J24 et J26 à J28). On constate que pour un N° de pli de correspondance en Lettre Recommandée AR Signée en Fichier Structuré (LRAR FS) il faut :
- Des jetons obtenus des AC par PSC-COR: 9 de J 20 à J28 ;
- Des jetons en nombre fixe créés par le PSC: 9 de J1 à J6 et de J13 à J15 ;
- Des jetons en nombre variable selon le TYPCO créés par le PSC-COR: 10 de J7 à J12 et de J16 à J19, dans l'exemple de la LRAR FS;
Soit un total de 28 jetons.

La totalité des jetons énumérés ci-dessus figure dans une matrice de valeur probante documentaire (MVPD) qui permet aux PSC-COR de certifier la valeur probante de l'opération de correspondance électronique sécurisée selon l'invention.

Un PSC-COR doit contrôler la signature électronique des opérateurs engagés dans le processus de dématérialisation de l'ampliation au moment où l'ampliation est lancée par le procès verbal de signature juridique. Le scellement du 2^{ème} spécimen intervient au moment de l'exécution - ampliation ; le 2^{ème} spécimen est retourné avec le jeton de composition au PSD pour le BPG, et ceci avec le fichier structuré des mentions de correspondance (indexation dans la base de données de gestion) ; le 1^{er} spécimen est quant à lui inclus dans le procès verbal d'expédition ; quand le PSC-COR reçoit le PVE PSD, il contrôle sa signature électronique et toutes les signatures électroniques engagées dans le scellement et l'ampliation de chaque pli de correspondance ; le PSC-COR contrôle périodiquement (au moins une fois par jour, dans un mode préféré) la validité de la signature électronique des PSD qui signent les procès verbaux d'expédition et de réception (PVE et PVR).

Le PSC-COR a l'usage exclusif du système d'invitation consistant, si le destinataire n'a pas de compte de correspondance, ou s'il n'a pas de convention de dématérialisation avec l'expéditeur, à lui envoyer une invitation d'inscription et d'adhésion aux convention de correspondance universelle (CCU) et convention de correspondance bilatérale (CCB) ; cette invitation est normalement « ouverte », c'est-à-dire que l'invité a le choix entre tous les PSD listés, sauf accord particulier entre le PSC-COR et un PSD ; le PSC-COR a l'usage unique de l'identification numérique par le mobile pour contrôler tous les N° de session, et tous les codes qui sont à l'origine d'une session légale quelque soit le PSD et le pays.

Il existe au moins un jeton de coupon de gestion, celui-ci étant un document sous jacent ou dérivé du document de la correspondance principale : AR ou document antécédent ou suivant dans une suite documentaire, par exemple, comme explicité en commentaire à la figure 7.

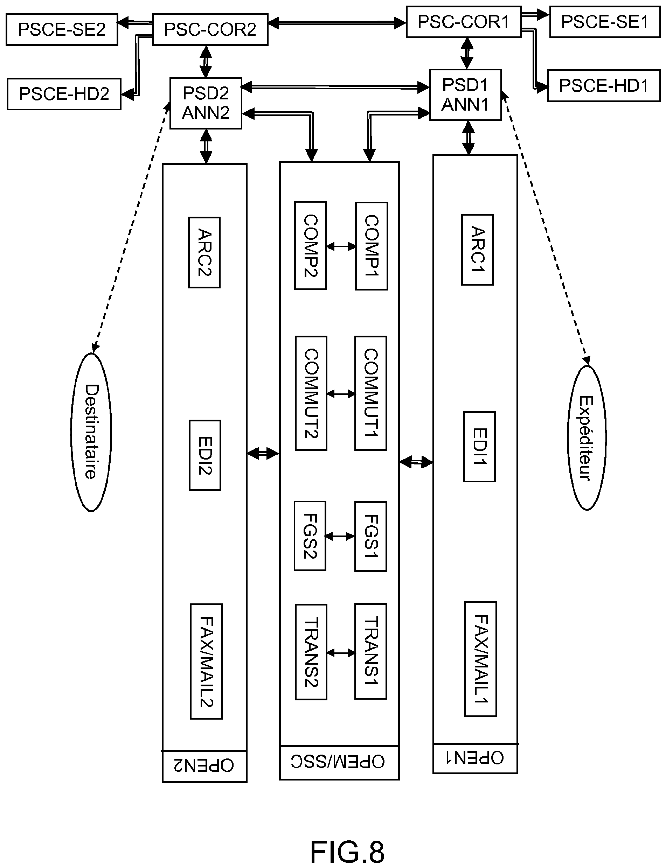

Un « Shared Services Centre » ou Centre de services partagé peut centraliser au moins les deux fonctions de composition et de commutation ; cet élément est susceptible de modifier la localisation et la circulation des jetons utilisés par les opérateurs de composition et les autres opérateurs, comme explicité en commentaire à la figure 8.

Les transmissions dépendent pour les produits de l'ampliation du type de réseau auquel appartiennent l'expéditeur et le destinataire pour chaque type de correspondance, comme explicité plus loin dans la description.

Pour assurer la traçabilité des correspondances, chaque pli de correspondance est suivi, comme détaillé dans la demande de brevet n° 0956819 du 30 septembre 2009 par :
- Un N° d'instance S° fourni par le PSD ;
- Un N° de session déterminé par le PSC-COR ;
- L'identité numérique en S° (code SMS créé par le PSC-COR)
- Un n° racine du téléchargement (ensemble de données multi destinataires)
- Un N° de pli par couple expéditeur/destinataire
- Un N° d'enrôlement qui donne par couple la matrice de valeur probante et la suite de jetons fixes et variables (PSC)

Le PSD soumissionne pour chaque couple et N° de correspondance auprès du PSC-COR afin de faire vérifier les attributs nécessaires pour le destinataire, son PSD, et ses opérateurs.

L'allocation des jetons est fonction du type de correspondance (TYPCO) :
- les données téléchargées en HTTPS sont triées par type de correspondance ;
- pour chaque type de correspondance, le PSD énumère les couples de correspondance ;
- pour chaque couple de correspondance et type de correspondance il y a un N° de pli ;
- à partir du type de correspondance et pour chaque couple expéditeur/destinataire, le PSC-COR vérifie que toutes les conditions juridiques sont réunies avant d'attribuer une suite de jetons appelée Matrice de valeur probante documentaire (MVPD), d'une part au PSD de l'expéditeur pour l'envoi, et d'autre part, au PSD du destinataire pour la réception AR.

On reprend maintenant l'exemple de la LRAR FS. Le PSC-COR attribue, pour chaque N° de correspondance:
- une suite de jetons pour le PSD1 Expéditeur, 1301 : J1 à J12 (12), plus les jetons des PSCE, J20 à J24 (5), soit au total 17 Jetons ;
- une suite de jetons pour le PSD2 Destinataire, 1302 : J13 à J19 (7), plus les jetons des PSCE, J25 à J28 (4), soit au total 11 Jetons.

Le total général est donc de 19 + 9 jetons, soit 28 jetons au total.

Le PSD de l'expéditeur PSD1, 1301 procède ensuite au chargement du tableau de jetons de correspondance par pli expéditeur. Le PSD utilisera 4 jetons pour justifier ses propres opérations d'une part d'identification forte d'autre part en liaison avec les OPET. Le PSD transmettra 8 jetons aux OPET pour exécution. Par ailleurs, le PSC-COR a vérifié que les signatures utilisées par le PSD et par les OPET sont valides en récupérant le justificatif de validité de leur PSCE-SE.

Le PSD du destinataire PSD2, 1302 procède également au chargement d'un tableau de jetons de correspondance par pli destinataire (AR). Le PSD utilisera 2 jetons pour justifier ses opérations pour l'identification forte et avec les OPET. Le PSD transmettra 4 Jetons aux OPET pour exécution. Par ailleurs, le PSC-COR a vérifié que les signatures utilisées par le PSD et par les OPET sont valides en récupérant le justificatif de validité de leur PSCE-SE.

Le PSD de l'expéditeur PSD1, 1301 lance alors l'ordonnancement de la composition des spécimens :
- 1 jeton J2 pour la préparation consistant à remettre les données à l'opérateur de composition OPET-COMP1, 1711 ;
- 1 jeton J3 remis à l'opérateur de composition OPET-COMP1, 1711 pour justifier de la composition de deux spécimens, l'un renvoyé scellé au PSD1, 1301 pour validation, et l'autre en attente de scellement après validation.

Le PSD de l'expéditeur PSD1, 1301 réalise alors un Procès Verbal de Validation du ou des spécimens export. Un jeton de validation est prévu pour chaque spécimen ayant fait l'objet dans le BPG1, 1311 d'une autorisation d'expédition avec une signature juridique constatée par le PSD par un procès verbal signé. Le PSD1, 1301 signifie ensuite cette validation à l'opérateur de composition OPET-COMP1, 1711, lui remet un jeton d'ampliation J6, ainsi que les jetons. (J7 à J12) d'exécution de l'ampliation en plusieurs applications du spécimen : originaux, duplicata, coupon de gestion AR, fichier structuré de gestion, etc...

La figure 6 représente une vue fonctionnelle d'un mécanisme d'ampliation dans un mode de réalisation de l'invention.

L'ampliation est la seconde phase de la composition du document qui permet à l'issue de la fabrication d'un spécimen du document, de décliner le nombre d'originaux, de duplicata, de copie conformes, de fichiers structurés de gestion, et de coupons de gestion servant à tous les besoins des parties en correspondance de transaction, selon les spécificités du TYPCO ou de la suite de plusieurs correspondances liées entre elles, notamment par un chemin de révision comptable et fiscal. L'ampliation établit par exemple sur la base du spécimen d'une commande, les coupons de gestion nécessaires pour générer ultérieurement un bon de livraison, un récépissé de livraison, une facture, un accusé de réception de facture, un bon à payer, etc...Ces coupons de gestion peuvent donner la faculté de faire à partir d'une opération documentaire initiale, répertoriée sur le tableau des correspondances certifiées, des opérations complémentaires, postérieures, et spécifiques pendant une certaine durée. Pour chaque déclinaison d'un spécimen documentaire validé par l'expéditeur, l'ampliation établit le contenu spécifique de la nouvelle version en fonction de la nature du document juridique à établir et de son usage final. Et cette ampliation peut également soumettre le document traité à l'horodatage et au scellement pour en garantir l'intégrité et la date.

L'ampliation d'un spécimen de facture, conformément au modèle de dématérialisation d'une facture fiscale à valeur probante, consiste à créer par exemple 2 originaux de factures signés et destinés aux deux coffres d'archivage des parties, 2 duplicata PDF introduits dans leurs deux comptes courants de correspondance, et un coupon de gestion BAP, Bon à Payer permettant au client destinataire, dans un délai paramétrable, d'accepter et payer la facture (pour autoriser son escompte ou son paiement). Quand le destinataire - client voudra exercer cette faculté d'acceptation et de paiement, il ne pourra le faire qu'en exerçant le coupon de gestion qui établit un lien durable entre la facture et le document confirmant explicitement le Bon à Payer.

C'est donc le processus d'ampliation qui engage le nombre de coupons de gestion nécessaires à la réalisation des opérations ultérieures.

Chaque coupon de gestion attaché à l'opération ultérieure dont il légitime la création, véhicule des données génériques qui sont indispensables au contenu du nouveau document à établir. Les coupons de gestion véhiculent des données ou des mentions légales obligatoires qui sont déterminantes pour la valeur juridique des documents auxquels ils sont destinés. Le coupon de gestion créé par l'ampliation d'un spécimen de document validé et signé juridiquement en ligne par son émetteur, a une durée de vie limitée de manière à empêcher la création d'un document prévu par la suite, et dans la suite documentaire, au-delà d'un certain délai ou d'une certaine date. Par exemple, on peut limiter le délai de création d'une facture à partir d'une commande en indiquant le 31 décembre car le changement de tarif public et d'exercice social interdit toute facturation ultérieurement sur la base de la référence de la commande initiale. Autrement dit, on fait appliquer la caducité de la commande au-delà d'un certain délai et on en prévient par alerte les parties en cause.

Détaillons maintenant les opérations d'ampliation.

L'ordonnancement du serveur PSD1, 1301 débute par l'envoi à l'opérateur de composition de l'expéditeur OPET-COMP1, 1711 du nombre d'ordres et de plis de correspondance à expédier aux destinataires indiqués. Il y a pour chaque ordre de correspondance et destinataire, avec le fichier de données à traiter, le jeton de composition associé à cette fonction de dématérialisation. L'opérateur de composition est chargé de générer pour chaque pli de correspondance 2 spécimens pour le compte de son adhérent expéditeur. L'opérateur de composition applique pour les deux spécimens établis par pli de correspondance, un N° d'immatriculation unique et identique pour les deux spécimens. L'opérateur de composition renvoie dans le BPG1, 1311 de l'expéditeur sur le serveur PSD1, 1301 un des deux spécimens que l'expéditeur devra valider pour déclencher l'expédition effective. Tant que l'expéditeur n'a pas validé explicitement « le pli en instance de validation », l'OPET-COMP1 conserve en attente un spécimen avec le jeton correspondant, et la procédure de dématérialisation est en attente d'une validation.

L'expéditeur notifié par email de l'existence d'un ou plusieurs « plis en instance de validation » vient sur l'interface de son BPG sur le serveur PSD1, 1301 afin de choisir les spécimens de correspondance qu'il veut envoyer. Pour chaque pli qu'il veut envoyer, il fera un double clic de validation qui manifeste sa volonté d'envoyer. La personne notifiée passe par la session S∘ d'identification personnelle, et elle choisit la session S₂ pour la « validation des plis à envoyer ». Naturellement, si cette personne n'a pas été habilitée à valider par le titulaire du compte de correspondance consolidé, il ne pourra pas activer la session S₂.

Un procès verbal est dressé par le PSD à chaque session S₂ en faisant le lien entre l'identification forte opérée en S∘ (1), les spécimens choisis en double cliquant (2), et le double clic associé à un horodatage (3). Ce lien entre 1,2, et 3 vaut signature juridique de la part de l'expéditeur : c'est une signature juridique d'expédition du contenu du document avec l'adresse du destinataire. PSD signe ce fichier associant les trois éléments et l'enregistre dans son journal de procès verbal d'expédition.

Pour garantir l'intégrité du fichier de signature juridique, l'opérateur effectue un scellement de ce « Fichier Structuré de Signature Juridique » avec un condensat SHA1 afin d'avoir un « constat de signature juridique » incontestable. Ce fichier est déposé sur un Serveur d'archivage WORM réservé. Une copie conforme du « fichier structuré de signature juridique » avec un scellement SHA1 est transmise au PSC-COR qui effectue un contrôle de conformité sur la liste récapitulative du Fichier Structuré de Signature Juridique, ainsi qu'un contrôle de cohérence par rapport à sa base de données. Il signe électroniquement ce « Fichier Structuré de Signature Juridique » avant de l'archiver en coffre fort électronique, et avant de transmettre la piste d'audit au serveur de séquestre d'un Huissier de Justice. Cette piste d'audit comprend ses contrôles et la copie signée du Fichier Structuré de Signature Juridique. L'attestation de séquestre Huissier permet au PSC-COR de délivrer un certificat de valeur probante pour la signature juridique du document (envoi ou AR). Ce certificat est essentiel pour obtenir in fine la certification globale de la correspondance électronique conformément à l'échelle de valeur probante établie par le PSC-COR et délivré par lui aux parties et à leurs opérateurs respectifs.

Après validation de l'expéditeur et enregistrement du procès verbal signé dans son journal, le serveur PSD1, 1301 transmet à l'opérateur de composition OPET-COMP1, 1711 les Numéros d'immatriculation identiques caractérisant les « spécimens validés », en y ajoutant pour chaque pli à élaborer les jetons nécessaires à la réalisation de la prestation modèle TYPCO.

L'opérateur de composition OPET-COMP1, 1711 récupère les Numéros d'immatriculation des spécimens validés et peut alors sceller le spécimen qu'il a gardé par devers lui pour chaque pli de correspondance à élaborer. Il renvoie ensuite le jeton J3 au serveur PSD1, 1301 avec le justificatif de la journalisation réservée à la composition du document spécimen dont le statut est « correspondance à envoyer signée ».

Dès que le jeton de composition J3 est retourné, l'OPET-COMP1, 1711 qui a reçu les jetons pour les prestations restant à exécuter sur chaque pli de correspondance, engage la procédure d'exécution. Celle-ci débute par l'ampliation qui consiste à se servir du spécimen scellé réservé à chaque pli de correspondance pour créer des versions (VERS) de la correspondance ou des fichiers en nombre limité conformes aux spécifications stipulées par le TYPCO, c'est-à-dire le cahier des charges de ce type de correspondance choisi par l'expéditeur.

Les versions envisageables sont:
- Deux originaux (ORI) avec deux jetons (J7, J8) à déposer à l'archivage légal ou officiel des deux parties chez leurs Opérateurs Tiers d'Archivage, OPET-ARC1, 1741 et OPET-ARC2, 1742 ;
- Deux duplicata (DUP) avec deux jetons (J9, J10) à mouvementer dans les deux comptes courants de correspondance (CCC) chez leurs Opérateurs Tiers de Commutation, OPET-CMT1, 1721 et OPET-CMT2, 1722 ;
- Eventuellement, un fichier d'impression (PRN) avec un jeton destiné à être utilisé pour l'impression et la poste chez l'Opérateur Tiers Éditique OPET-EDI1, 1751 (impression, mise sous pli, et remise à la poste) ;
- Eventuellement, un fichier de gestion structuré (FGS) avec un jeton J11 destiné à être envoyé en transmission sécurisée à l'ordinateur du destinataire qui pourra être lu par un procédé de « lecture automatique univoque » des mentions obligatoires ou contractuelles préparées à sa demande (protocole de communication AS2 pour sécuriser le réseau sans tiers de confiance intermédiaire) ;
- Eventuellement, un fichier avec un jeton destiné à la transmission multi canal réalisée par un Tiers de Transmission, OPET-TRANS1, 1731 (fax ou mail sécurisés) ; s'il y a une opération du type fax ou mail à faire envoyer par un opérateur national, le fichier créé dans l'ampliation à cette fin disposera d'un jeton qui aura été donné par PSD au moment où l'expéditeur a validé l'expédition (et provenant originellement de PSC-COR ;
- Eventuellement, un fichier avec un jeton dénommé coupon de gestion destiné à créer, à partir d'un fichier de données, un nouveau document dérivé du premier et établi ultérieurement par une autre personne, soit l'expéditeur, soit le destinataire ; ce n'est pas la même personne qui est attributaire selon que l'on crée un document complémentaire pour un AR ou pour une Proposition de Paiement PP, par exemple ; ce fichier de données caractérisant le Coupon de Gestion est transmis avec le jeton à l'Opérateurs Tiers de Composition désigné par la procédure TYPCO concernée.

Mais on peut envisager d'autres versions pourvu que cela soit convenu entre les parties (PSC-COR, PSD, OPET et utilisateurs)

Le coupon de gestion est un fichier qui contient les données nécessaires pour établir ultérieurement un document dérivé du précédent, le document de la correspondance principale. Ce fichier de données est structuré pour pouvoir être exploité automatiquement par l'Opérateurs Tiers de Composition. Il porte le nom de son objet principal (AR, PP, ...) ainsi que la référence du document racine : Courrier/AR ou Facture/Proposition de Paiement. Quand l'opérateur de composition initial a établi ce coupon de gestion, il le transmet avec le jeton à l'Opérateur qui est chargé de la composition du document dérivé (AR, PP,...) sous la forme de 2 spécimens. L'Opérateur chargé de la composition du document dérivé établit deux spécimens. Il en garde un avec le jeton et il transmet le second au PSD qui gère le BPG de la personne désignée pour le valider.

La personne notifiée de la création du document AR ou PP sous forme de spécimen à valider se connecte à son BPG par les sessions S∘ et S₃. La session S₃ ne sert qu'à valider les AR pour des plis de correspondance en instance de réception ou à recevoir d'autres coupons de gestion. La personne identifiée en S∘ en accédant par l'habilitation qui convient à S₃, et visualise le spécimen du pli de correspondance en attente de réception. Après exécution d'un double clic par l'utilisateur sur la référence du spécimen AR ou PP, le serveur PSD établit le procès verbal de réception PVR en associant automatiquement l'identité de la personne authentifiée (1) en S∘, le spécimen AR ou PP correspondant au coupon de gestion initial (2), et l'horodatage du double clic (3) qui matérialise la volonté de la dite personne voulant lire ou consulter le pli de correspondance reçu de l'expéditeur, ou voulant payer la facture en instance de règlement.

Ce lien entre 1,2, et 3 vaut signature juridique de la part du destinataire ou de la personne connectée : c'est une signature juridique de réception du contenu du document avec la mention de l'expéditeur. Le serveur PSD signe ce fichier associant les trois éléments et l'enregistre dans son journal de procès verbal de réception. Le procès verbal de signature juridique peut se faire aussi bien sur le spécimen d'un ordre de paiement.

Dès que le procès verbal est signé par le serveur PSD, celui-ci signale à l'Opérateur de composition que le spécimen a été accepté ou validé, et il lui fournit avec la référence du procès verbal de réception ou de paiement correspondant, le nombre de jetons nécessaires pour obtenir des opérateurs désignés les traitements d'ampliation qui leur sont confiés, essentiellement ceux nécessaires à l'archivage des deux originaux AR ou PP, et nécessaires à la commutation des duplicata de gestion AR ou PP introduits dans les comptes de correspondance.

L'Opérateur de composition qui a gardé le double du spécimen AR peut alors exécuter le scellement du spécimen dont il dispose, et retourner enfin le jeton avec la justification de son opération journalisée dans son grand livre de composition.

Aussitôt, deux types d'opérations sont engagées, d'une part, la lecture du pli de correspondance ou des ordres de paiement qui deviennent accessibles dans le compte de correspondance (ou dans l'état de paiement), et d'autre part, l'exécution des opérations d'ampliation spécifiques à ce type de document AR ou PP. L'ampliation consistera donc à créer deux originaux à remettre avec les deux jetons aux tiers d'archivage concernés (celui de l'expéditeur et celui du destinataire), et deux duplicata de gestion à remettre avec les deux jetons aux tiers de commutation concernés (celui de l'expéditeur et celui du destinataire) car ils tiennent les comptes de correspondance.

L'opérateur de composition de l'expéditeur OPET-COMP1, 1711 réalise ensuite deux types de traitement :
1. D'une part, il utilise le 2^{ème} spécimen pour créer deux originaux
   Ces deux originaux ont chacun un jeton (J7, J8) ; chaque original avec son jeton est remis aux Tiers d'archivage électronique OPET-ARC1, 1741 et OPET-ARC2, 1742; un N° de dépôt horodaté est confirmé à l'opérateur de composition OPET-COMP1, 1711 ; les jetons d'archivage sont retournés avec les justificatifs du dépôt au PSD1, 1711 ; le PSD1, 1711 envoie alors en retour un certification d'archivage pour ce N° de dépôt.
   Aucun original ne peut être consulté par son propriétaire car il n'a pas accès à son coffre pour pouvoir justifier de l'intégrité des originaux archivés. I peut en revanche consulter le duplicata de gestion dans son compte de correspondance consolidé. Il peut cependant transférer son original de son coffre à un autre coffre dès lors que le certificat d'archivage a été retourné dans le coffre. Aucun coffre n'accepte un transfert entrant d'un original s'il n'est pas accompagné de son certificat de valeur probante pour la composition originale, et pour l'archivage légal à valeur probante. Il existe une totale séparation entre les flux et mouvements d'originaux de coffres à coffres autorisés munis de leurs certificats délivrés par les PSD/PSC-COR, et les autres supports de l'ampliation qui transitent par des comptes de correspondance ou des comptes de gestion. Cette dichotomie garantit la nature originale d'un fichier électronique puisque s'il est créé dans le réseau des coffres forts électroniques avec le jeton justificatif, il est par nature un document original et il ne peut jamais « passer » dans le réseau de gestion qui fait fonctionner des comptes de correspondance et des interfaces de gestion accessibles aux utilisateurs. Ainsi, on peut garantir que le document original n'est pas reproductible puisqu'il n'y a aucun passage entre le circuit des coffres forts d'archivage électronique nominatifs et les comptes de gestion documentaire.
   Chaque original est remis au tiers d'archivage qui agit soit pour l'expéditeur soit pour son client. En fonction du type de réseau, et de l'organisation du « Shared Services Center », on définit un routage sécurisé pour envoyer les informations de l'opérateur de composition et d'ampliation à l'opérateur exécutant pour l'archivage électronique. Les différentes modalités de routage sont définies plus loin dans la description.
2. D'autre part, il utilise le 2^{ème} spécimen pour créer un quantité spécifiée de produits documentaires.

Tous ces produits documentaires sont des documents de gestion, et pour cette raison, ils sont accessibles et même reproductibles en gestion collaborative, et en fonction des habilitations des personnes enregistrées dans chaque compte de correspondances par le titulaire du compte : employés, préposés, mandataires ad hoc....

A titre d'exemple, pour l'ampliation de la LRAR FS, la typologie et la notation de la valeur probante ont été déterminées par le PSC-COR de la manière suivante :
- Deux duplicata accessibles dans des comptes de correspondance ;
- Un fichier structuré de gestion destiné à être envoyé à un ordinateur distant capable de faire de la « lecture automatique univoque » sécurisée par un protocole de communication sécurisé par une signature électronique et un accusé de réception justifié de type MDN, c'est-à-dire un Accusé de réception signé et retourné automatiquement à son expéditeur avec l'obligation d'apporter la preuve au destinataire que celui-ci (AR) a bien été archivé ; cette communication s'effectue par exemple par un protocole de type AS2 ; tant que l'expéditeur du fichier n'a pas reçu l'AR signé du destinataire, et archivé cet AR après avoir vérifié la validité de la signature électronique de l'AR, il n'a pas le droit de détruire le fichier qu'il a envoyé in fine avec succès au destinataire ;
- Un coupon de gestion.

Le coupon de gestion est un fichier structuré destiné à être envoyé à un opérateur distant pour lui faire préparer et composer un document sous-jacent ou dérivé du premier : un accusé de réception sur courrier, une facture sur une commande, un bon à payer sur une facture....Dès que les deux spécimens du document secondaire, sous-jacent, dérivé du premier sont composés, la personne responsable de sa gestion et de son « activation » est notifiée, et l'un des deux spécimens est mis à sa disposition dans son BPG, chez son PSD. Ensuite, pour activer sa correspondance, la procédure de validation et d'ampliation documentaire sera identique à la procédure générale.

La figure 7 illustre le processus d'utilisation des coupons de gestion dans une suite de correspondances de gestion dans un mode de réalisation de l'invention.

Dans un processus de gestion qui doit être auditable, on définit une « suite de gestion de correspondances électroniques » qui doit nécessairement respecter des règles d' « appariement » et d' « adossement » pour se conformer d'une part, aux contraintes légales de sécurité et de légalité, et d'autre part aux contraintes de gestion destinées à améliorer la qualité et la performance de la gestion administrative, notamment pour déterminer le résultat légal de gestion.

On définit l' « appariement » comme le lien entre deux documents reliés par une fonction de gestion, par exemple le lien entre une commande et une facture pour justifier l'acte de gestion en comptabilité. L'appariement est un moyen légal de gérer un dossier à valeur légale probante en rattachant irrévocablement un document économique à un autre, notamment pour le bilan, le hors bilan, et le compte d'exploitation qui sont certifiés par un Commissaire aux Comptes (CAC).

On définit l' « adossement » comme le lien entre deux documents établis par des opérateurs de nature différente, par exemple, une facture établie par un opérateur de traitement de correspondance électronique et un paiement effectué par un « opérateur monétaire » comme une banque. On peut également citer en exemple, une facture en devise adossée à un prêt bancaire, à un crédit d'affacturage, et à une couverture de change. L'adossement est une mesure de sécurité pour assurer la « causalité » entre une facture et son paiement traités par deux opérateurs de nature différente. L'adossement est une mesure financière pour garantir par exemple la correspondance des valeurs entre une facture et sa couverture de change à terme, car un contrat export couvert par un contrat de garantie sur la parité 1€= 1,50 $ valorise irrévocablement 1 milliard € à 1,5 Milliards $ pendant la durée de la couverture, par exemple, 1 an. Toute substitution ou altération de la garantie peut faire gagner frauduleusement des sommes considérables constituées par les écarts entre une facture conservée chez un opérateur de traitement de correspondance électronique et la garantie conservée par la banque garante. S'il n'y a pas de liaison entre ces deux opérateurs de nature différente, ou si cette liaison n'est pas intègre, des fraudeurs ont un moyen très facile de modifier les adossements en changeant leur contenu ou en substituant des documents dont la différence n'apparaît pas à l'œil nu, surtout au milieu de millions de documents informatiques.

Il existe des suites documentaires légales ou conventionnelles mises au point pour chaque chaîne de documents commerciaux et financiers, notamment pour les chaînes qui sont en vigueur dans les grandes filières industrielles de l'automobile, de la distribution, etc.....C'est principalement la chaîne d'approvisionnement (ou supply chain) qui comprend la commande, le bon de livraison, la livraison acceptée, la facture, l'avoir, l'acceptation d'affacturage, la lettre de recouvrement, le bon à payer, l'ordre de paiement, et la confirmation de paiement bancaire.

A chaque étape de la création documentaire, on vérifie que les documents dématérialisés précédemment existent bien et qu'ils sont certifiés à valeur probante, pour éviter d'engager des opérations nouvelles et des confirmations documentaires non causées, susceptibles d'engendrer des fraudes.

Les contraintes légales sont fortes, notamment pour les sociétés cotées et les banques qui doivent prouver que les documents sont convenablement appariés dans l'ordre logique de leur schéma fonctionnel et comptable (chaîne de transactions), et qu'en tout état de cause, personne n'a pu ultérieurement altérer ces liens économiques notamment en substituant à un document entrant dans la chaîne de gestion un autre document postérieur, différent du premier, et altérant l'économie des opérations ou leur résultat final.

La contrainte d'appariement consiste donc a vérifier systématiquement le lien sémantique, historique et logique entre les documents de transactions entrant dans une même chaîne de gestion. Cela consiste à garantir que chaque lien est inaltérable et bien protégé en archivage légal électronique et, plus précisément encore, classé dans le dossier de référence du chemin de révision comptable. La gestion des appariements assure donc non seulement le lien de gestion légale entre les opérations documentaires, selon les règles comptables, fiscales, et contractuelles, mais elle assure également leur affectation et leur conservation durable et intègre dans le dossier de référence réservé à la conservation des documents professionnels selon un mode de classement conforme au contrôle de gestion.

Les appariements sont des liens établis selon des règles de gestion spécifiques pour chaque suite de documents électroniques, et ces appariements sont scellés et horodatés pour préserver l'intégrité des liens économiques et juridiques entre les opérations, et pour éviter d'antidater certaines pièces dans les dossiers tenus pour le « chemin de révision comptable et fiscale ». La certification comptable reposant sur la sécurité entre des millions d'opérations de bilan, les Commissaires aux comptes demandent des preuves informatiques de plus en plus nombreuses et sûres de la sécurité des appariements et des adossements. Les banques quant à elles, eu égard aux lois anti-blanchiment, sont tenues d'obtenir la justification de tous les paiements commerciaux et financiers.

Dans le système et le procédé de l'invention, des coupons de gestion, dérivés de correspondances principales, ont pour fonction de permettre la vérification de l'appariement et de l'adossement.

A chaque étape de constitution d'une transaction et d'un document de correspondance approprié, entrant dans une suite de gestion documentaire, et engageant un émetteur et un destinataire dans une relation bilatérale et contractuelle, il existe une obligation de générer autant de coupons de gestion qu'il existe de transactions possibles dans la suite de cette gestion documentaire.

Le coupon de gestion est un élément de traçabilité qui permet de connaître aux étapes ultérieures les caractéristiques ou les antécédents de l'opération en cours de création de façon à véhiculer l'information historique nécessaire, de légitimer ou causer régulièrement l'opération en cours en toute transparence ; le coupon de gestion permet ainsi d'établir la valeur juridique et la conformité des opérations de correspondance et de gestion par rapport aux procédures de gestion interne et externe et aux dispositions légales.

Si une transaction commerciale est créée sans se fonder sur l'existence et la valeur probante des coupons de gestion des opérations précédentes qui en autorisent l'émission et la signature, cette transaction est informatiquement impossible à réaliser et le processus de mise en œuvre sera bloqué préventivement chez l'opérateur de traitement et générera une alerte des utilisateurs de manière à éviter d'archiver électroniquement une opération nulle et non avenue qui n'aurait pas été détectée auparavant.

Les coupons de gestions d'une suite documentaire doivent tous exister pour démontrer la légalité de la chaîne de transactions et pour établir la valeur juridique de ses opérations avant de les archiver légalement de part et d'autre, chez l'émetteur et chez le destinataire. Les coupons de gestion établissent la valeur juridique probante des opérations entrant dans la chaîne de transaction et permettent d'assurer que ces opérations et leurs documents dématérialisés sont intrinsèquement identiques ou symétriques, et conservés en toute sécurité informatique dans les coffres forts d'archivage légal électronique des personnes engagées dans la chaîne de transaction. Le coupon de gestion est un élément essentiel non seulement pour assurer la sécurité des échanges de documents à valeur probante, en vérifiant que le fondement d'un nouveau document est bien établi par les coupons de gestion des opérations antérieures, et donc par leur régularité, mais il est aussi un élément essentiel pour la certification de la valeur probante. La certification de la valeur probante d'une « suite documentaire » inscrite sur le « tableau des documents de correspondance notés ou certifiés », est fondée non seulement sur la conformité des processus mis en œuvre, mais aussi sur la spécificité et le nombre nécessaire de coupons à établir dans les phases de dématérialisation documentaire antérieures.

Sans l'exhaustivité des coupons et leur usage systématique à tous les stades de la dématérialisation de la suite documentaire, la certification de la valeur probante du document final ne peut être obtenue de l'autorité de certification indépendante qui est le prestataire de services de certification électronique documentaire, et par voie de conséquence, le document final ne peut être introduit par le tiers d'archivage dans le coffre fort électronique à valeur juridique certaine.

Cette prévention est nécessaire aussi quand on envisage le transfert d'un document original électronique d'un coffre fort électronique à un autre hébergé et sécurisé par un autre tiers d'archivage : autrement dit, les parties utilisent deux tiers de confiance d'archivage différents ou veulent transférer ultérieurement leur document original à un tiers qui est domicilié chez un autre tiers d'archivage. Le tiers d'archivage qui reçoit un transfert de document original déclaré à valeur juridique certaine doit pouvoir, pour la sécurité de son client, vérifier que le dit document reçu est « certifié » à valeur probante par une autorité indépendante, et que la preuve juridique peut être administrée instantanément par un clic en accédant aux coupons de gestion qui en ont établi les caractéristiques juridiques et la traçabilité depuis l'origine. C'est par exemple, un contrôle essentiel quand un fournisseur transfère le document de facture qui est actif financier à part entière, à un banquier ou à un affactureur qui rachète la facture en tant que créance pour financer l'entreprise cédante. Sur un fichier de facture, il est difficile de prouver que l'un d'entre eux est un original puisque le fichier peut être reproductible à l'infini. A partir du moment où l'on attache au fichier de facture les coupons de gestion, on a la traçabilité des opérations génériques et la preuve de détenir l'original.

Une partie des processus à appliquer lors de la création de coupons de gestion utilisables pour la validation d'une suite de gestion documentaire sont décrits dans la demande est décrite dans la demande de brevet français n°FR07/00648 du 29 01 2007 déposée par la demanderesse. Ces processus sont cependant grandement améliorés par le processus d'ampliation et le processus d'émission/retour de jetons de certification spécifiques auxdits coupons de gestion.

En particulier, dans le système de l'invention, le processus de création des coupons de gestion fait partie du processus d'ampliation. Par référence à la figure 4, ce processus 4670 est réalisé en parallèle à la création des originaux et duplicata et fait l'objet de l'émission par le PSC-COR d'un jeton spécifique vers le PSD qui les transfère au moment de l'ordonnancement vers l'OPET-COMP. Le retour de ce jeton au PSC-COR via le PSD atteste de la bonne exécution de l'ampliation des coupons de gestion. Dans l'exemple de la figure 7, la correspondance principale est la notification d'un contrat signé 7000 par un client à un fournisseur ; ce contrat peut comporter, comme illustré sur la figure 4 coupons de gestion :
- Un coupon de gestion CG1, 7100 qui est une commande, destiné à être expédié par le client à son fournisseur ;
- Un coupon de gestion CG2, 7200 qui est la facture d'un lot de la commande destinée à être expédiée par le fournisseur à son client ;
- Un coupon de gestion CG3, 7300 qui est une acceptation de facture destinée à être expédiée par le client à son fournisseur;
- Un coupon de gestion CG4, 7400 qui est un escompte de facture destiné à être expédié par le fournisseur à sa banque ;
- Un coupon de gestion CG5, 7500 qui est un ordre de virement destiné à opérer le crédit du montant net escompté au compte du fournisseur dans les livres de la banque.

Dans le système de l'invention où le client, le fournisseur et la banque peuvent signer des conventions de correspondance qui définissent notamment un type de correspondance tel que la suite de gestion documentaire comprenant les 5 coupons de gestion ci-dessus décrits. Dans le cadre de ladite convention, les parties acceptent par exemple de ne pouvoir émettre des factures par voie électronique qu'à partir de coupons de gestion dérivés de commandes. Le libellé des factures est donc prédéterminé et ne peut être changé. Les documents composés à partir des coupons de gestion CG1 à CG4 sont donc naturellement appariés. Le document de virement issu de CG5 sera également naturellement adossé à la facture sous-jacente qui est elle-même appariée à la commande et donc au contrat. En variante, on peut admettre que les mentions de gestion telles que les montant facturés, le taux d'escompte, etc...figurant sur les documents issus des coupons puissent prendre des valeurs différentes de celles spécifiées au départ mais dans des plages prédéterminées. Le respect des prescriptions des conventions de correspondance portant sur des suites de gestion documentaire doit être assuré par les acteurs de la chaîne de confiance, ici en particulier le ou les PSD et les OPET de composition et de commutation du client, du fournisseur et de la banque.

La figure 8 représente l'architecture d'un centre de services partagés dans un mode de réalisation de l'invention.

Un centre de services partagés ou Shared Sevices Centre (SSC) regroupe pour des raisons d'efficacité les fonctions qui peuvent être facilement délocalisées pour le plus grand nombre d'utilisateurs du système selon l'invention, Expéditeur et Destinataire, telles que la composition (COMP1 et COMP2), la commutation (CMT1 et CMT2, la préparation des FGS (FGS1 et FGS2) et la transmission de fichiers pour impression ou émission de fax ou mails locaux (TRANSI et TRANS2).

Les fonctions d'archivage (ARC1 et ARC2), la préparation des fichiers d'éditique (EDI1 et EDI2) et l'émission des fax ou e-mail locaux sont, s'il n'est pas possible de les mutualiser, réalisées par des opérateurs nationaux ou régionaux, OPEN1 et OPEN2.

Les fonctions des prestataires de services de domiciliation, PSD1 et PSD2 sont normalement également nationales, de même que les fonctions des prestataires de services de certification de correspondance, PSC-COR1 et PSC-COR2. Les fonctions de tenue d'annuaire, ANN1 et ANN2, sont représentées sur la figure comme exercées par les PSD1 et PSD2, mais peuvent également être exercées par des entités indépendantes. Les PSC-COR1 et PSC-COR2 doivent interroger respectivement de manière périodique les PSCE-SE1, PSCE-HD1 et PSCE-SE2 et PSCE-HD2, compétents pour leurs ressorts géographiques, ceci pour vérifier la validité des signatures des acteurs de la chaîne de confiance et effectuer des requêtes d'horodatage.

Les communications entre fonctions au sein du SSC pour les opérations de correspondance dont la fonction de contrepartie est dans le même SSC sont représentées par flèches en traits simples. Cela signifie qu'elles peuvent avoir lieu en mode réseau local, ledit réseau local étant isolé du monde extérieur. La communication des fichiers et données peut avoir lieu en mode Pass File (PF), sans protocole de routage sécurisé. En revanche, les communications entre le SSC avec les OPEN, avec les PSD et entre les PSD et entre les PSC-COR qui sont représentées par des flèches doubles ont lieu sur un réseau étendu, en mode Switch Out (SWO), en utilisant un protocole de routage sécurisé explicité dans la suite de la description.

Les communications entre l'Expéditeur et le PSD1 et entre le Destinataire et le PSD2 ont lieu sur le réseau public de télécommunications, en utilisant un mode de protection simple, soit HTTPS pour les connexions (complété par une procédure d'authentification forte au cours d'une session de type S₀ déjà évoquée, soit un protocole de type AS2 pour les transferts de fichiers.

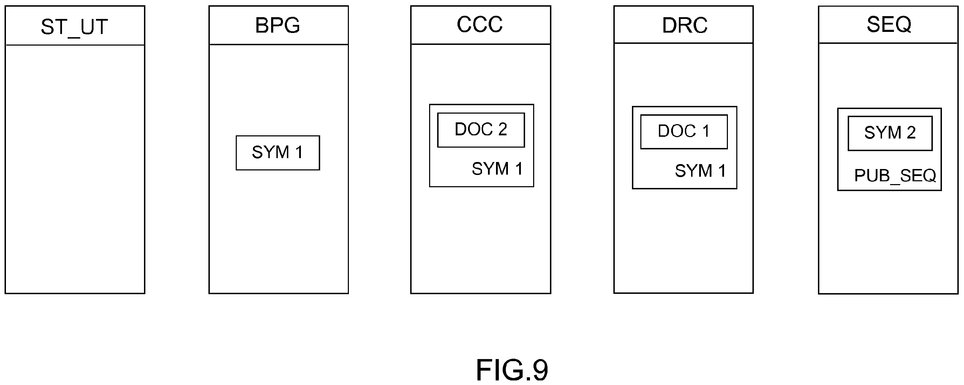

La figure 9 représente l'organigramme fonctionnel d'un procédé de chiffrement d'un document à archiver avec séquestre de la clé de chiffrement.

Plusieurs modalités de chiffrement sont possibles pour préserver la confidentialité des documents archivés dans les coffre-fort électroniques des utilisateurs par l'OPET-ARC de l'expéditeur 1741, ou par l'OPET-ARC du destinataire 1742.

Chacune des trois modalités peut être mise en œuvre au stade de l'ampliation du spécimen, du côté de l'expéditeur et du côté du destinataire du document. Selon l'invention, l'opération d'ampliation comprend la création d'au moins deux originaux (l'un, DOC1, pour être archivé par l'OPET-ARC 1741 de l'expéditeur, l'autre pour être envoyé au destinataire et archivé par son OPET-ARCD 1742) et d'au moins deux duplicata (l'un, DOC2, pour être conservé dans le compte courant de correspondance (CCC) de l'expéditeur, l'autre pour être envoyé au destinataire et conservé dans le CCC du destinataire).

La première modalité est illustrée par la figure 9. Dans cette modalité, qui ne nécessite pas l'utilisation d'une clé de signature électronique :
- Deux clés de chiffrement symétriques identiques, SYM1 et SYM2 sont créées au moment de l'ampliation 4610 par le PSD 1301, 1302 dans le BPG 1311, 1312 ; ces clés sont spécifiques pour chaque document ;
- Le premier exemplaire de la clé SYM1 est utilisé pour chiffrer le duplicata DOC2 qui est stocké dans le compte courant de correspondance CCC et l'original DOC1 qui est transmis à l'OPET-ARC pour être archivé ;
- Le deuxième exemplaire de la clé SYM2 est chiffré avec la clé publique d'un tiers séquestre de clés SEQ et est transmise audit tiers séquestre après chiffrement.

Le jeton d'acquittement de l'opération d'archivage rend compte du chiffrement par SYM1. Un jeton supplémentaire est créé pour acquitter l'opération de chiffrement de SYM2 et de séquestre de la clé chiffrée.

Dans cette modalité, l'utilisateur peut accéder au duplicata DOC2 dans son CCC en le déchiffrant avec l'exemplaire de la clé SYM1 qui est dans son BPG. Il ne peut pas accéder à l'original DOC1, sauf à effectuer une sortie d'archivage qui rompt la chaîne de confiance. Il ne peut pas non plus lire le duplicata DOC2 sur sa station de travail, car il n'a pas à sa disposition sur ladite station la clé SYM1, sauf à compromettre le secret de ladite clé en la transférant également. En cas de nécessité (perte ou destruction de la copie de clé SYM1, disparition de l'utilisateur, commission rogatoire...), une autorité habilitée à cet effet peut récupérer la clé SYM2 chiffrée auprès du tiers séquestre, la lui faire déchiffrer et ainsi avoir accès aux document DOC1 et DOC2 en clair.

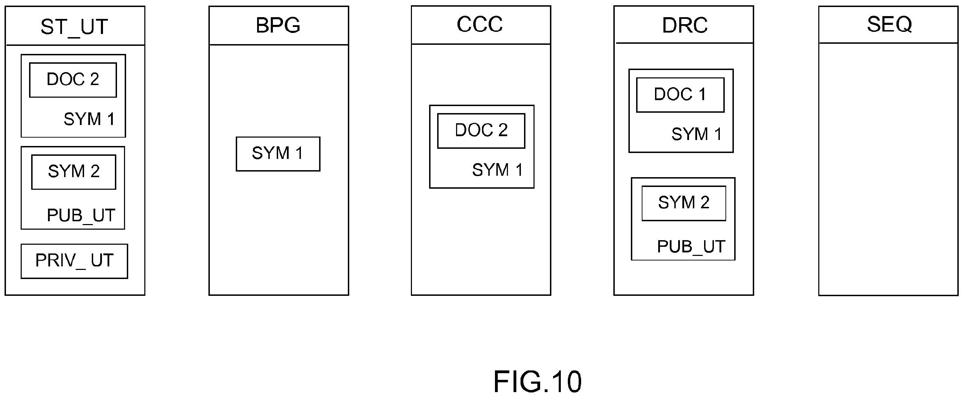

La figure 10 représente l'organigramme fonctionnel d'un procédé de chiffrement d'un document à archiver sans séquestre de la clé de chiffrement.

Dans cette modalité, on utilise la clé publique de la signature électronique de l'utilisateur. On procède de la manière suivante :
- Comme dans la modalité exposée ci-dessus en commentaire à la figure 9, deux clés de chiffrement symétriques identiques, SYM1 et SYM2 sont créées au moment de l'ampliation 4610 par le PSD 1301, 1302 dans le BPG 1311, 1312; ces clés sont spécifiques pour chaque document ;
- Le premier exemplaire de la clé SYM1 est utilisé pour chiffrer le duplicata DOC2 qui est stocké dans le compte courant de correspondance CCC et l'original DOC1 qui est transmis à l'OPET-ARC pour être archivé ;
- Le deuxième exemplaire de la clé SYM2 est chiffré avec la clé publique de la signature électronique de l'utilisateur puis transmise après chiffrement à la station de travail locale de l'utilisateur ;
- En variante, l'exemplaire SYM2 chiffré avec la clé publique de la signature électronique de l'utilisateur peut être archivé chez l'OPET-ARC avec le document original DOC1.

Le jeton d'acquittement de l'opération d'archivage rend compte du chiffrement par SYM1, et éventuellement de l'archivage de l'exemplaire de clé SYM2 chiffré avec la clé publique de la signature électronique de l'utilisateur. Un jeton supplémentaire est créé pour acquitter l'opération de chiffrement de SYM2.

Dans cette modalité, l'utilisateur peut accéder au duplicata DOC2 dans son CCC en le déchiffrant avec l'exemplaire de la clé SYM1 qui est dans son BPG. Il ne peut pas accéder à l'original DOC1, sauf à effectuer une sortie d'archivage qui rompt la chaîne de confiance. Mais il peut accéder au duplicata DOC2 sur sa station de travail locale en en transférant une copie sur sa station, en déchiffrant la clé SYM2 qui est présente sur ladite station avec la clé privée de sa signature électronique, puis en utilisant la clé SYM2 déchiffrée pour lire le document DOC2. Dans cette modalité, cependant, en cas de perte des deux exemplaires de clé SYM1 et SYM2, il n'est plus possible d'accéder aux documents DOC1 et DOC2, sauf si la clé SYM2, chiffrée avec la clé publique de la signature électronique de l'utilisateur a été archivée auprès de l'OPET-ARC avec le document DOC1.

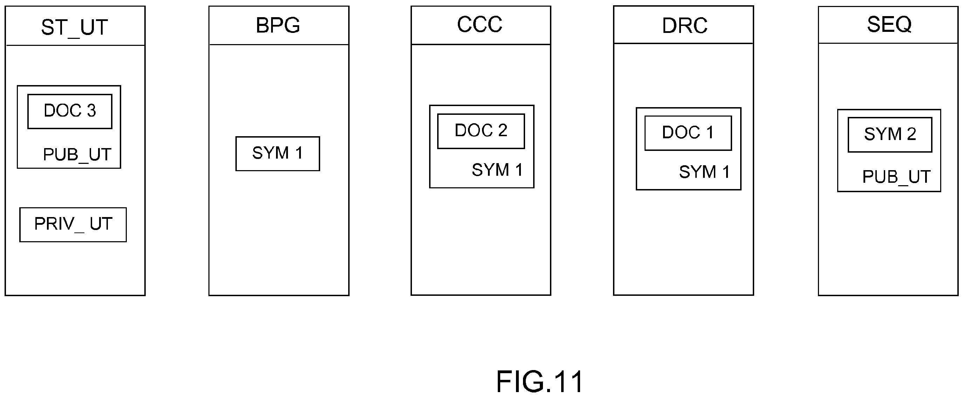

La figure 11 représente l'organigramme fonctionnel d'un procédé de chiffrement d'un document à archiver avec séquestre de la clé de chiffrement qui préserve un accès local de l'utilisateur au document archivé. Dans cette modalité, on utilise les clés publique et privée de la signature électronique de l'utilisateur. On procède de la manière suivante :
- Au moment de l'ampliation, on crée un duplicata supplémentaire DOC3 ;
- Comme dans la modalité exposée ci-dessus en commentaire à la figure 9, deux clés de chiffrement symétriques identiques, SYM1 et SYM2 sont créées au moment de l'ampliation 4610 par le PSD 1301, 1302 dans le BPG 1311, 1312 ; ces clés sont spécifiques pour chaque document ;
- Le premier exemplaire de la clé SYM1 est utilisé pour chiffrer le duplicata DOC2 qui est stocké dans le compte courant de correspondance CCC et l'original DOC1 qui est transmis à l'OPET-ARC pour être archivé ;
- Le deuxième duplicata DOC3 est chiffré avec la clé publique de l'utilisateur puis transféré sur la station de travail locale de l'utilisateur ;
- Le deuxième exemplaire de la clé SYM2 est également chiffré avec la clé publique de la signature électronique de l'utilisateur puis transmise après chiffrement à un tiers séquestre de clés SEQ.

Le jeton d'acquittement de l'opération d'archivage rend compte du chiffrement par SYM1 Un premier jeton supplémentaire est créé pour acquitter la création, le chiffrement et le transfert du deuxième duplicata DOC3. Un deuxième jeton supplémentaire est créé pour acquitter l'opération de chiffrement de SYM2.

Dans cette modalité, l'utilisateur peut accéder au duplicata DOC2 dans son CCC en le déchiffrant avec l'exemplaire de la clé SYM1 qui est dans son BPG. Il ne peut pas accéder à l'original DOC1, sauf à effectuer une sortie d'archivage qui rompt la chaîne de confiance. Mais il peut accéder au deuxième duplicata DOC3 qui est présent sur sa station de travail locale, en déchiffrant ledit document qui est présent sur ladite station avec la clé privée de sa signature électronique. En cas de nécessité (perte ou destruction de la copie de clé SYM1, disparition de l'utilisateur, commission rogatoire...), une autorité habilitée à cet effet peut récupérer la clé SYM2 chiffrée auprès du tiers séquestre, récupérer la clé publique de la signature électronique de l'utilisateur auprès du séquestre de la signature électronique dudit utilisateur, déchiffrer SYM2 avec ladite clé publique et ainsi avoir accès aux documents DOC1 et DOC2 en clair.

Dans cette modalité, l'utilisateur peut en fait dupliquer sur son système d'information, sans risque de compromission des secrets si ledit système est protégé selon les règles de l'art en la matière, l'intégralité de son CCC, géré sur site distant par son PSD. On peut ainsi réaliser une intégration complète du système de correspondance électronique sécurisée avec les autres applications informatiques de l'entreprise.

Le système de l'invention peut être mis en œuvre en prévoyant des serveurs du commerce, dont les performances doivent être dimensionnées en fonction des flux à traiter par le système. C'est également le cas des dispositifs de stockage en ligne et d'archivage hors ligne. Il est nécessaire de prévoir les redondances permettant de remplir les obligations de qualité de service prévues dans les conventions avec les utilisateurs. Les centres de traitement informatique hébergeant ces serveurs et dispositifs de stockage doivent être dotées des dispositifs et procédures de sécurité conformes aux règles de l'art qui permettent de garantir leur intégrité contre les attaques physiques ou informatiques.

L'architecture physique du réseau de communication qui relient les différents serveurs et dispositifs de stockage doit répondre aux mêmes impératifs, mais peut être conçue, déployée et opérée par un homme de l'art. Elle doit être définie pour optimiser les flux et les stockages de données, ce qui peut conduire à avoir plusieurs serveurs pour chaque niveau de l'architecture fonctionnelle décrite en commentaire à la figure 1. L'architecture logique du réseau reliant les serveurs hébergeant les Annuaires, les serveurs des PSD, les OPET et les PSC-COR doit cependant répondre, pour une mise en œuvre privilégiée du système de l'invention, à un cahier des charges, qui a été évoqué à plusieurs reprises et qui est détaillé dans les paragraphes qui suivent.

Le protocole de communication mis en œuvre dans le système de l'invention est prescrit à titre principal par un cahier des charges établi par un ou plusieurs PSC-COR. Les éléments principaux d'un cahier des charges conforme aux prescriptions de la présente invention comporte les caractéristiques suivantes :
- Chaque serveur hébergeur d'un Annuaire, des fonctions d'un opérateur PSD, de certaines fonctions d'OPET et des fonctions d'un PSC-COR dispose d'un module de communication ayant un identifiant unique attaché à son adresse IP, éventuellement complété par un mot de passe contrôlant les entrées et les sorties ;
- Les liaisons entre les serveurs sont établies par la MCIS désignant les relations bijectives autorisées, et éventuellement, précisant les transmissions univoques ou biunivoques ;
- Le PSC-COR doit pouvoir recevoir un accusé de réception signé pour toute communication sécurisée qu'elle établit avec tous les serveurs hébergeurs d'Annuaires, de fonctions de PSD et de fonctions OPET ; à cet effet, chaque communication est soumise à une signature électronique utilisant un bi clé symétrique et nécessitant des contreparties de la communication un AR ou ACK (acknowledgement) ; l'AR peut être soumis à une confirmation circonstanciée prouvant que le fichier a été ouvert, contrôlé en terme d'intégrité, et contrôlé en terme de conformité (vérification dans le fichier structuré transporté que les mentions obligatoires existent bien à l'arrivée) ;
- Tant que la confirmation de réception n'est pas reçue, l'expéditeur du fichier a l'interdiction de le détruire.

Par ailleurs, dans le réseau de communication prévu pour mettre en œuvre le système de l'invention, sont définis des sous réseaux qui déterminent les modalités du routage des correspondances, des jetons et des tableaux de validation entre les différents serveurs impliqués dans les opérations de correspondance électronique sécurisées et les modalités de validation dudit routage dans les sessions ouvertes pour effectuer une remise, une expédition ou une réception de correspondance électronique sécurisée. Le sous réseau approprié est défini pour chaque session de correspondance. Dans un mode privilégié de réalisation de l'invention, on définit 4 sous réseaux qui sont notés R₁ à R₄ :
- R₁ : L'expéditeur et tous les destinataires sont rattachés à un même opérateur PSD, utilisent le même OPET et le même PSC-COR ;
- R₂ : Il y a au moins deux PSD différents qui doivent intervenir dans l'opération de correspondance électronique sécurisée ; les OPET et le PSC-COR sont communs ;
- R₃ : Il y a au moins deux PSD différents qui doivent intervenir dans l'opération de correspondance électronique sécurisée ; il y a au moins deux OPET ; lePSC-COR est commun;
- R₄ : Il y a au moins deux PSD différents qui doivent intervenir dans l'opération de correspondance électronique sécurisée ; il y a au moins deux OPET ; il y a au moins deux PSC-COR.

Dans le sous réseau R₁, un seul serveur hébergeur d'Annuaire dispose de toutes les informations relatives aux parties à l'opération de correspondance électronique sécurisée. Dans les sous réseaux R₂ et R₃, au moins deux serveurs hébergeurs d'Annuaires sont nécessaires pour disposer de ces informations, ces serveurs hébergeurs d'Annuaires étant interrogés par le PSC-COR commun. Dans le cas du sous réseau R₄, un protocole de centralisation des serveurs hébergeurs d'Annuaires doit avoir été défini entre les PSC-COR concernés. Une des modalités est de prévoir un « super » PSC-COR ayant cette compétence pour plusieurs pays.

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Système de correspondance électronique sécurisée entre au moins un utilisateur expéditeur (1101) et au moins un utilisateur destinataire (1102), ledit système comprenant au moins un serveur de domiciliation de correspondances électroniques (1300, 1301, 1302), au moins un serveur de composition (1710, 1711, 1712) desdites correspondances et au moins un serveur de certification de correspondances électroniques (1500, 1501,1502), ledit système étant tel que, pour chaque opération de correspondance à valeur probante :
- ledit serveur de composition est adapté pour générer au moins deux spécimen, ainsi que deux originaux uniques certifiés à valeur probante et envoyer un des spécimens audit serveur de domiciliation (1300, 1301, 1302) ;
- ledit serveur de domiciliation (1300, 1301, 1302) est adapté pour :
∘ authentifier ledit utilisateur expéditeur (1100) par un moyen d'authentification forte ;
∘ mettre ledit spécimen à disposition dudit utilisateur expéditeur ;
∘ recevoir dudit utilisateur expéditeur une validation de la correspondance ;
∘ créer un fichier structuré de signature juridique faisant le lien entre l'authentification forte, ledit spécimen, et la validation de la correspondance, et sceller ce fichier structuré avec un condensat SHA1 ;
∘ puis transmettre audit serveur de certification (1500, 1501,1502) une copie conforme dudit fichier structuré ;
- ledit serveur de certification est adapté pour :
∘ effectuer un contrôle de conformité sur la liste récapitulative du fichier structuré, ainsi qu'un contrôle de cohérence par rapport à la base de données ;
∘ signer électroniquement le fichier structuré, puis transmettre une piste d'audit résultant du contrôle de conformité à un serveur de séquestre d'un huissier de justice, ladite piste d'audit comprenant les contrôles et la copie signée du fichier structuré ;
∘ délivrer, à partir d'une attestation de séquestre de l'huissier, un certificat de valeur probante pour la signature juridique des originaux et la signature électronique du fichier structuré ;
- après validation par l'utilisateur expéditeur et enregistrement d'un procès-verbal établissant la valeur probante de l'original, ledit serveur de composition (1710, 1711, 1712) est adapté pour traiter l'autre spécimen en vue de l'envoi à l'utilisateur destinataire de l'opération de correspondance.

2. Système de correspondance électronique sécurisée selon la revendication 1, dans lequel une copie dudit fichier structuré de signature juridique est scellée par le serveur de domiciliation (1301), archivée par un serveur d'archivage (1741).

3. Système de correspondance électronique sécurisée selon la revendication 2, dans lequel le fichier structuré de signature juridique, une preuve de son scellement et une preuve de son archivage sont enregistrés et déposés par le serveur de domiciliation sur le serveur d'un tiers séquestre.

4. Système de correspondance électronique sécurisée selon la revendication 1, dans lequel un des originaux est archivé par un serveur d'archivage (1740, 1741, 1742) dans un coffre-fort électronique d'un utilisateur

5. Système de correspondance électronique sécurisée selon la revendication 4, dans lequel, entre la génération dudit document original et son archivage, deux exemplaires d'une clé symétrique de chiffrement, SYM1 et SYM2 sont générés par le serveur de domiciliation (1300, 1301, 1302), ledit document original étant chiffré avec l'exemplaire de clé symétrique SYM1, ledit exemplaire SYM1 étant conservé dans le bureau privé de gestion (1310, 1311, 1312) de l'utilisateur, l'exemplaire de clé symétrique SYM2 étant transmis à un tiers séquestre SEQ après chiffrement dudit exemplaire SYM2 par une clé publique dudit tiers séquestre.

6. Système de correspondance électronique sécurisée selon la revendication 4, dans lequel, entre la génération dudit document original et son archivage, deux exemplaires d'une clé symétrique de chiffrement, SYM1 et SYM2 sont générés par le serveur de domiciliation, 1300, 1301, 1302, ledit document original étant chiffré avec l'exemplaire de clé symétrique SYM1, ledit exemplaire SYM1 étant conservé dans le bureau privé de gestion (1310, 1311, 1312) de l'utilisateur, l'exemplaire de clé symétrique SYM2 étant transmis audit utilisateur après chiffrement dudit exemplaire SYM2 par une clé publique dudit utilisateur.

7. Système de correspondance électronique sécurisée selon la revendication 6, dans lequel une copie dudit exemplaire SYM2 chiffré par une clé publique de l'utilisateur est transmise à l'opérateur d'archivage (1740, 1741, 1742) pour être conservée avec le document original dans le coffre-fort électronique de l'utilisateur.

8. Système de correspondance électronique sécurisée selon l'une des revendications 1 à 7, dans lequel le serveur de composition (1710, 1711, 1712) est en outre adapté pour générer au moins deux duplicata dont l'un est destiné à être transféré dans le compte de correspondance de l'utilisateur expéditeur dans un livre de correspondance situé par un serveur de commutation (1720, 1721) et l'autre duplicata est destiné à être transféré dans le compte de correspondance d'un utilisateur destinataire dans un livre de correspondance par un serveur de commutation (1720, 1722).

9. Système de correspondance électronique sécurisée selon les revendications 5 et 8 ou les revendications 6 et 8, dans lequel au moins un des duplicata est chiffré avec l'exemplaire de clé SYM1 avant transfert dans un livre de correspondance.

10. Système de correspondance électronique sécurisée selon les revendications 5 et 8, dans lequel au moins un troisième duplicata est généré, ledit troisième duplicata étant chiffré avec une clé publique de l'utilisateur expéditeur/destinataire avant transfert vers une station de travail locale dudit utilisateur expéditeur/destinataire.

11. Système de correspondance électronique sécurisée selon l'une des revendications 1 à 10, dans lequel ledit serveur de composition est en outre adapté pour générer un fichier de données vers un serveur de transmission (1730, 1731, 1732).

12. Système de correspondance électronique sécurisée selon l'une des revendications 1 à 11, dans lequel ledit serveur de composition est en outre adapté pour générer un fichier structuré de gestion destiné à être transmis à un serveur de gestion d'application d'un utilisateur destinataire.

13. Système de correspondance électronique sécurisée selon la revendication 12, dans lequel ladite transmission au serveur de gestion d'application d'au moins un utilisateur destinataire est effectuée en utilisant un protocole de type AS2.

14. Système de correspondance électronique sécurisée selon l'une des revendications 1 à 13, dans lequel ledit serveur de composition est en outre adapté pour générer un fichier d'impression destiné à être transmis à au moins un serveur d'éditique.

15. Système de correspondance électronique sécurisée selon l'une des revendications 1 à 14, dans lequel ledit serveur de composition est en outre adapté pour générer au moins un coupon de gestion destiné à devenir une nouvelle correspondance électronique dont le contenu est au moins partiellement déterminé par des règles de gestion d'une suite de correspondances électroniques à laquelle ledit coupon est rattaché.

16. Système de correspondance électronique sécurisée selon la revendication 15, dans lequel la composition de ladite nouvelle correspondance électronique issue dudit coupon de gestion par un serveur de composition rattaché au serveur de certification (1500, 1501, 1502) ayant certifié l'ampliation dudit coupon de gestion n'est possible que si ladite nouvelle correspondance électronique est conforme auxdites règles de gestion.

17. Système de correspondance électronique sécurisée selon l'une des revendications 1 à 16 dans lequel, pour chaque opération de correspondance électronique dont la valeur probante doit être évaluée, au moins un des serveurs de composition (1710, 1711, 1712), de commutation (1720, 1721, 1722), de transmission (1730, 1731, 1732), d'archivage (1740, 1741, 1742) et d'éditique (1750, 1751, 1752) est adapté pour recevoir du serveur de domiciliation (1300, 1301, 1302) un nombre de jetons de certifications déterminé par le type de ladite opération, lesdits jetons lui étant transmis par le serveur de certification (1500, 1501, 1502).

18. Système de correspondance électronique sécurisée selon la revendication 17, dans lequel le serveur de certification (1500, 1501, 1502) est adapté pour ne délivrer un certificat de valeur probante à l'utilisateur expéditeur (1101) que si et quand il a reçu du serveur de domiciliation (1300, 1301, 1302), avant l'expiration d'un délai paramétrable, la totalité des jetons qu'il a émis, ledit retour attestant de la bonne exécution par lesdits serveurs des opérations spécifiées par le serveur de certification (1500, 1501, 1502) pour le type de l'opération de correspondance objet du certificat de valeur probante.

19. Système de correspondance électronique sécurisée selon l'une des revendications 1 à 18, dans lequel ceux des serveurs qui réalisent des fonctions de composition (1711, 1712), de commutation (1721, 1722) et de transmission (1731, 1732) appartiennent à un premier groupe de serveurs connectés entre eux par un réseau local de communication et s'échangent des données par un protocole de type Pass File.

20. Système de correspondance électronique sécurisée selon la revendication 19, dans lequel ceux des serveurs qui réalisent des fonctions d'archivage (1741) et d'éditique (1751) limitées à un ressort territorial appartiennent à un deuxième groupe de serveurs connectés au réseau local des serveurs du premier groupe par un réseau étendu de communication et échangent des données avec ledit réseau par un protocole de type Switch Out.

21. Procédé de correspondance électronique sécurisée entre au moins un utilisateur expéditeur (1101) et au moins un utilisateur destinataire (1102), ledit procédé comprenant au moins une étape de connexion à un serveur de domiciliation de correspondances électroniques (1300, 1301, 1302), au moins une étape de composition desdites correspondances, et au moins un étape de connexion du serveur de domiciliation à un serveur de certification de correspondances électroniques (1500, 1501,1502), ledit procédé étant tel que, pour chaque opération de correspondance à valeur probante :
- ledit serveur de composition génère au moins deux spécimen, ainsi que deux originaux certifiés à valeur probante et envoie un des spécimens audit serveur de domiciliation (1300, 1301, 1302) ;
- ledit serveur de domiciliation:
∘ authentifie ledit utilisateur expéditeur (1100) par authentification forte ;
∘ met ledit spécimen à disposition dudit utilisateur expéditeur ;
∘ reçoit dudit utilisateur expéditeur une validation de la correspondance ;
∘ crée un fichier structuré de signature juridique faisant le lien entre l'authentification forte, ledit spécimen, et la validation de la correspondance, et sceller ce fichier structuré avec un condensat SHA1 ;
∘ puis transmet audit serveur de certification une copie conforme dudit fichier structuré ;
- ledit serveur de certification :
∘ effectue un contrôle de conformité sur la liste récapitulative du fichier structuré, ainsi qu'un contrôle de cohérence par rapport à la base de données ;
∘ signe électroniquement le fichier structuré, puis transmettre une piste d'audit résultant du contrôle de conformité à un serveur de séquestre d'un huissier de justice, ladite piste d'audit comprenant les contrôles et la copie signée du fichier structuré ;
∘ délivre, à partir d'une attestation de séquestre de l'huissier, un certificat de valeur probante pour la signature juridique des originaux et la signature électronique du fichier structuré ;
- après validation par l'utilisateur expéditeur et enregistrement d'un procès-verbal établissant la valeur probante de l'original, ledit serveur de composition traite l'autre spécimen en vue de l'envoi à l'utilisateur destinataire de l'opération de correspondance.

## Patentansprüche

1. System für sicheren elektronischen Schriftverkehr zwischen mindestens einem sendenden Benutzer (1101) und mindestens einem empfangenden Benutzer (1102), wobei das System mindestens einen elektronischen Lastschriftverkehrsserver (1300, 1301, 1302), mindestens einen Erstellungsserver (1710, 1711, 1712) für den Schriftverkehr und mindestens einen elektronischen Schriftverkehrszertifizierungsserver (1500, 1501, 1502) umfasst, wobei das System derart ist, dass für jeden Schriftverkehrsvorgang mit Beweiskraft:
- der Erstellungsserver zum Erzeugen von mindestens zwei Exemplaren sowie zwei eindeutigen zertifizierten Originalen mit Beweiskraft und zum Senden eines der Exemplare zu dem Lastschriftserver (1300, 1301, 1302) ausgelegt ist;
- der Lastschriftserver (1300, 1301, 1302) dafür ausgelegt ist:
∘ den sendenden Benutzer (1100) mit einem starken Authentifizierungsmittel zu authentifizieren;
∘ das Exemplar dem sendenden Benutzer zur Verfügung zu stellen;
∘ eine Validierung des Schriftverkehrs vom sendenden Benutzer zu empfangen;
∘ eine strukturierte Datei für eine rechtsgültige Signatur, die die Verbindung zwischen der starken Authentifizierung, dem Exemplar und der Validierung des Schriftverkehrs herstellt, zu erzeugen und diese strukturierte Datei mit einem SHA1-Digest zu versiegeln;
∘ anschließend eine echte Kopie der strukturierten Datei zum Zertifizierungsserver (1500, 1501, 1502) zu übertragen;
- der Zertifizierungsserver dafür ausgelegt ist:
∘ eine Konformitätsprüfung der Übersichtsliste der strukturierten Datei sowie eine Konsistenzprüfung in Bezug auf die Datenbank durchzuführen;
∘ die strukturierte Datei elektronisch zu signieren, dann einen aus der Konformitätsprüfung resultierenden Prüfpfad zu einem Treuhandserver eines Gerichtsvollziehers zu übertragen, wobei der Prüfpfad die Prüfungen und die signierte Kopie der strukturierten Datei umfasst;
∘ , auf der Basis einer Treuhandbescheinigung des Gerichtsvollziehers, ein Zertifikat mit Beweiskraft für die rechtsgültige Signatur der Originale und die elektronische Signatur der strukturierten Datei zu liefern;
- nach der Validierung durch den sendenden Benutzer und der Registrierung eines die Beweiskraft des Originals feststellenden Berichts ist der Erstellungsserver (1710, 1711, 1712) zum Verarbeiten des anderen Exemplars ausgelegt, damit es zu dem empfangenden Benutzer der Schriftverkehrsoperation gesendet wird.

2. Sicheres elektronisches Schriftverkehrssystem nach Anspruch 1, wobei eine Kopie der strukturierten Datei der rechtskräftigen Signatur durch den Lastschriftserver (1301) versiegelt und von einem Archivierungsserver (1741) archiviert wird.

3. Sicheres elektronisches Schriftverkehrssystem nach Anspruch 2, wobei die strukturierte Datei der rechtskräftigen Signatur, ein Nachweis ihrer Versiegelung und ein Nachweis ihrer Archivierung durch den Lastschriftserver auf dem Server eines Dritttreuhänders registriert und hinterlegt werden.

4. Sicheres elektronisches Schriftverkehrssystem nach Anspruch 1, wobei eines der Originale von einem Archivierungsserver (1740, 1741, 1742) in einem elektronischen Safe eines Benutzers archiviert wird.

5. Sicheres elektronisches Schriftverkehrssystem nach Anspruch 4, wobei zwischen dem Erzeugen des Originaldokuments und seiner Archivierung zwei Exemplare eines symmetrischen Verschlüsselungsschlüssels, SYM1 und SYM2, durch den Lastschriftserver (1300, 1301, 1302) erzeugt werden, wobei das Originaldokument mit dem symmetrischen Schlüsselexemplar SYM1 verschlüsselt wird, wobei das Exemplar SYM1 im privaten Verwaltungsbüro (1310, 1311, 1312) des Benutzers aufbewahrt wird, wobei das symmetrische Schlüsselexemplar SYM2 nach dem Verschlüsseln des Exemplars SYM2 durch einen öffentlichen Schlüssel des Dritttreuhänders zu einem Dritttreuhänder SEQ übertragen wird.

6. Sicheres elektronisches Schriftverkehrssystem nach Anspruch 4, wobei zwischen dem Erzeugen des Originaldokuments und seiner Archivierung zwei Exemplare eines symmetrischen Verschlüsselungsschlüssels, SYM1 und SYM2, vom Lastschriftserver 1300, 1301, 1302 erzeugt werden, wobei das Originaldokument mit dem symmetrischen Schlüsselexemplar SYM1 verschlüsselt wird, wobei das Exemplar SYM1 im privaten Verwaltungsbüro (1310, 1311, 1312) des Benutzers aufbewahrt wird, wobei das symmetrische Schlüsselexemplar SYM2 nach dem Verschlüsseln des Exemplars SYM2 durch einen öffentlichen Schlüssel des Benutzers zu diesem übertragen wird.

7. Sicheres elektronisches Schriftverkehrssystem nach Anspruch 6, wobei eine Kopie des mit einem öffentlichen Schlüssel des Benutzers verschlüsselten Exemplars SYM2 zum Archivierungsoperator (1740, 1741, 1742) übertragen wird, um mit dem Originaldokument im elektronischen Safe des Benutzers gespeichert zu werden.

8. Sicheres elektronisches Schriftverkehrssystem nach einem der Ansprüche 1 bis 7, wobei der Erstellungsserver (1710, 1711, 1712) ferner zum Erzeugen von mindestens zwei Duplikaten ausgelegt ist, von denen eines zum Speichern im Schriftverkehrskonto des sendenden Benutzers in einem Schriftverkehrsbuch bestimmt ist, das sich bei einem Vermittlungsserver (1720, 1721) befindet, und das andere Duplikat zum Übertragen von einem Vermittlungsserver (1720, 1722) auf das Schriftverkehrskonto eines empfangenden Benutzers in einem Schriftverkehrsbuch bestimmt ist.

9. Sicheres elektronisches Schriftverkehrssystem nach den Ansprüchen 5 und 8 oder den Ansprüchen 6 und 8, wobei mindestens eines der Duplikate vor der Übertragung in ein Schriftverkehrsbuch mit dem Schlüsselexemplar SYM1 verschlüsselt wird.

10. Sicheres elektronisches Schriftverkehrssystem nach den Ansprüchen 5 und 8, wobei mindestens ein drittes Duplikat erzeugt wird, wobei das dritte Duplikat, vor dem Übertragen zu einer lokalen Arbeitsstation des sendenden/empfangenden Benutzers mit einem öffentlichen Schlüssel des sendenden/empfangenden Benutzers verschlüsselt wird.

11. Sicheres elektronisches Schriftverkehrssystem nach einem der Ansprüche 1 bis 10, wobei der Erstellungsserver ferner zum Erzeugen einer Datendatei zu einem Übertragungsserver (1730, 1731, 1732) ausgelegt ist.

12. Sicheres elektronisches Schriftverkehrssystem nach einem der Ansprüche 1 bis 11, wobei der Erstellungsserver ferner zum Erzeugen einer strukturierten Verwaltungsdatei ausgelegt ist, die zum Übertragen zu einem Anwendungsverwaltungsserver eines empfangenden Benutzers bestimmt ist.

13. Sicheres elektronisches Schriftverkehrssystem nach Anspruch 12, wobei die Übertragung zum Anwendungsverwaltungsserver mindestens eines empfangenden Benutzers mittels eines Protokolls vom Typ AS2 erfolgt.

14. Sicheres elektronisches Schriftverkehrssystem nach einem der Ansprüche 1 bis 13, wobei der Erstellungsserver ferner zum Erzeugen eine Druckdatei ausgelegt ist, die zur Übertragung zu mindestens einem Editing-Server bestimmt ist.

15. Sicheres elektronisches Schriftverkehrssystem nach einem der Ansprüche 1 bis 14, wobei der Erstellungsserver ferner zum Erzeugen von mindestens einem Verwaltungskupon ausgelegt ist, der dazu bestimmt ist, ein neuer elektronischer Schriftverkehr zu werden, dessen Inhalt mindestens teilweise durch Verwaltungsregeln für einen Satz von elektronischem Schriftverkehr bestimmt wird, an den der Kupon angehängt ist.

16. Sicheres elektronisches Schriftverkehrssystem nach Anspruch 15, wobei das Erstellen des neuen elektronischen Schriftverkehrs aus dem Verwaltungskupon durch einen an den Zertifizierungsserver (1500, 1501, 1502) angeschlossenen Erstellungsserver, der die Erweiterung des Verwaltungskupons zertifiziert hat, nur dann möglich ist, wenn der neue elektronische Schriftverkehr den Verwaltungsregeln entspricht.

17. Sicheres elektronisches Schriftverkehrssystem nach einem der Ansprüche 1 bis 16, wobei für jeden elektronischen Schriftverkehrsvorgang, dessen Beweiskraft zu bewerten ist, mindestens einer aus dem Erstellungs- (1710, 1711, 1712), Vermittlungs-(1720, 1721, 1722), Übertragungs- (1730, 1731, 1732), Archivierungs- (1740, 1741, 1742) und Editing-Server (1750, 1751, 1752) zum Empfangen, vom Lastschriftserver (1300, 1301, 1302), einer durch den Typ der Operation bestimmten Anzahl von Zertifizierungstokens ausgelegt ist, wobei die Tokens vom Zertifizierungsserver (1500, 1501, 1502) zu ihm übertragen werden.

18. Sicheres elektronisches Schriftverkehrssystem nach Anspruch 17, wobei der Zertifizierungsserver (1500, 1501, 1502) so ausgelegt ist, dass er dem sendenden Benutzer (1101) nur dann ein Zertifikat mit Beweiskraft liefert, wenn und wann er vom Lastschriftserver (1300, 1301, 1302) vor Ablauf einer parametrisierbaren Frist alle der von ihm gesendeten Token erhalten hat, wobei die Rückgabe die korrekte Ausführung der vom Zertifizierungsserver (1500, 1501, 1502) angegebenen Operationen für den Typ der Schriftverkehrsoperation, die Gegenstand des Zertifikats mit Beweiskraft ist, durch die Server bescheinigt.

19. Sicheres elektronisches Schriftverkehrssystem nach einem der Ansprüche 1 und 18, wobei diejenigen der Server, die die Funktionen Erstellen (1711, 1712), Vermitteln (1721, 1722) und Übertragen (1731, 1732) erfüllen, zu einer ersten Gruppe von Servern gehören, die über ein lokales Kommunikationsnetz miteinander verbunden sind und Daten über ein Protokoll vom Typ Pass File austauschen.

20. Sicheres elektronisches Schriftverkehrssystem nach Anspruch 19, wobei diejenigen der Server, die auf ein geografisches Gebiet begrenzten Funktionen Archivieren (1741) und Editing (1751) ausführen, zu einer zweiten Gruppe von Servern gehören, die mit dem lokalen Netz der Server der ersten Gruppe über ein erweitertes Kommunikationsnetz verbunden sind und über ein Protokoll vom Typ Switch Out Daten mit dem Netz austauschen.

21. Verfahren für sicheren elektronischen Schriftverkehr zwischen mindestens einem sendenden Benutzer (1101) und mindestens einem empfangenden Benutzer (1102), wobei das Verfahren mindestens einen Schritt des Verbindens mit einem elektronischen Lastschriftverkehrsserver (1300, 1301, 1302), mindestens einen Schritt des Erstellens des Schriftverkehrs und mindestens einen Schritt des Verbindens des Lastschriftservers mit einem elektronischen Schriftverkehrszertifizierungsserver (1500, 1501, 1502) umfasst, wobei das Verfahren derart ist, dass für jeden Schriftverkehrsvorgang mit Beweiskraft:
- der Erstellungserver mindestens zwei Exemplare sowie zwei zertifizierte Originale mit Beweiskraft erzeugt und eines der Exemplare zum Lastschriftserver (1300, 1301, 1302) sendet;
- der Lastschriftserver:
∘ den sendenden Benutzer (1100) durch starke Authentifizierung authentifiziert;
∘ das Exemplar dem sendenden Benutzer zur Verfügung stellt;
∘ von dem sendenden Benutzer eine Validierung des Schriftverkehrs erhält;
∘ eine strukturierte Datei für eine rechtsgültige Signatur erstellt, die die Verbindung zwischen der starken Authentifizierung, dem Exemplar und der Validierung des Schriftverkehrs herstellt und diese strukturierte Datei mit einem SHA1-Digest versiegelt;
∘ dann eine echte Kopie der strukturierten Datei zum Zertifizierungsserver überträgt;
- der Zertifizierungsserver:
∘ eine Konformitätsprüfung der Übersichtsliste der strukturierten Datei sowie eine Konsistenzprüfung in Bezug auf die Datenbank durchführt;
∘ die strukturierte Datei elektronisch signiert und dann einen aus der Konformitätsprüfung resultierenden Prüfpfad an einen Treuhandserver des Gerichtsvollziehers überträgt, wobei der Prüfpfad die Prüfungen und die signierte Kopie der strukturierten Datei umfasst;
∘ auf der Basis einer Treuhandbescheinigung des Gerichtsvollziehers ein Zertifikat mit Beweiskraft für die rechtsgültige Signatur der Originale und die elektronische Signatur der strukturierten Datei ausliefert;
- nach der Validierung durch den sendenden Benutzer und die Registrierung eines die Beweiskraft des Originals feststellenden Berichts der Erstellungsserver das andere Exemplar verarbeitet, damit es an den empfangenden Benutzer der Schriftverkehrsoperation gesendet wird.

## Claims

1. A system for secure electronic correspondence between at least one sender user (1101) and at least one addressee user (1102), said system comprising at least one electronic correspondence domiciliation server (1300, 1301, 1302), at least one composition server (1710, 1711, 1712) of said correspondence and at least one server for the certification of electronic correspondence (1500, 1501,1502), said system being such that, for each correspondence transaction with probative value:
- said composition server is adapted to generate at least two specimens, as well as two unique originals certified with probative value and to send one of the specimens to said domiciliation server (1300, 1301, 1302);
- said domiciliation server (1300, 1301, 1302) is adapted to:
∘ authenticate said sender user (1100) by a strong authentication mean;
∘ make said specimen available to said sender user;
∘ receive from said sender user a validation of the correspondence;
∘ create a legal signature structured file linking the strong authentication, said specimen, and the validation of the correspondence, and seal this structured file with a SHA1 condensate;
∘ then transmit to said certification server (1500, 1501,1502) a certified copy of said structured file;
- said certification server is adapted to:
∘ carry out a conformity check on the summary list of the structure file, as well as a consistency check against the database;
∘ electronically sign the structured file, then transmit an audit trail resulting from the compliance check to an escrow server of a court bailiff, said audit trail comprising the checks and the signed copy of the structured file;
∘ issue, based on a escrow certificate from the bailiff, a probative value certificate for the legal signature of the originals and the electronic signature of the structured file;
- after validation by the sender user and recording of a report establishing the probative value of the original, said composition server (1710, 1711, 1712) is adapted to process the other specimen to be sent to the addressee user of the correspondence operation.

2. The system for secure electronic correspondence according to claim 1, wherein a copy of said legal signature structured file is sealed by the domiciliation server (1301), archived by an archiving server (1741).

3. The system for secure electronic correspondence according to claim 2, wherein the legal signature structured file, proof of its sealing and proof of its archiving are recorded and deposited by the domiciliation server on the server of a third party escrow.

4. The system for secure electronic correspondence according to claim 1, wherein one of the originals is archived by an archiving server (1740, 1741, 1742) in an electronic safe of a user.

5. The system for secure electronic correspondence according to claim 4, wherein, between the generation of said original document and its archiving, two copies of a symmetric encryption key, SYM1 and SYM2, are generated by the domiciliation server (1300, 1301, 1302), said original document being encrypted with the copy of symmetrical key SYM1, said copy SYM1 being kept in the private management office (1310, 1311, 1312) of the user, the copy of symmetrical key SYM2 being transmitted to a third escrow SEQ after encryption of said copy SYM2 by a public key of said third party escrow.

6. The system for secure electronic correspondence according to claim 4, wherein, between the generation of said original document and its archiving, two copies of a symmetric encryption key, SYM1 and SYM2, are generated by the domiciliation server, 1300, 1301, 1302, said original document being encrypted with the copy of the symmetrical key SYM1, said copy SYM1 being kept in the private management office (1310, 1311, 1312) of the user, the copy of the symmetrical key SYM2 being transmitted to said user after encryption of said copy SYM2 by a public key of said user.

7. The system for secure electronic correspondence according to claim 6, wherein a copy of said copy SYM2 encrypted by a public key of the user is transmitted to the archiving operator (1740, 1741, 1742) to be kept with the original document in the electronic safe of the user.

8. The system for secure electronic correspondence according to one of claims 1 to 7, wherein the composition server (1710, 1711, 1712) is further adapted to generate at least two duplicates, one of which is intended to be transferred to the correspondence account of the sender user in a correspondence book located by a switching server (1720, 1721) and the other duplicate is intended to be transferred to a correspondence account of an addressee user in a correspondence book by a switching server (1720, 1722).

9. The system for secure electronic correspondence according to claims 5 and 8 or claims 6 and 8, wherein at least one of the duplicates is encrypted with the key copy SYM1 prior to transfer into a correspondence book.

10. The system for secure electronic correspondence according to claims 5 and 8, wherein at least a third duplicate is generated, said third duplicate being encrypted with a public key of the sender/addressee user prior to transfer to a local workstation of said sender/addressee user.

11. The system for secure electronic correspondence according to one of claims 1 to 10, wherein said composition server is further adapted to generate a data file to a transmission server (1730, 1731, 1732).

12. The system for secure electronic correspondence according to one of claims 1 to 11, wherein said composition server is further adapted to generate a structured management file intended to be transmitted to an application management server of a addressee user.

13. The system for secure electronic correspondence according to claim 12, wherein said transmission to the application management server of at least one addressee user is carried out according to a protocol of the AS2 type.

14. The system for secure electronic correspondence according to one of claims 1 to 13, wherein said composition server is further adapted to generate a printing file intended to be transmitted to at least one electronic publishing server.

15. The system for secure electronic correspondence according to one of claims 1 to 14, wherein said composition server is further adapted to generate at least one management coupon intended to become a new electronic correspondence whose content is at least partially determined by management rules for a series of electronic correspondence to which said management coupon is attached.

16. The system for secure electronic correspondence according to claim 15, wherein the composition of said new electronic correspondence from said management coupon by a composition server attached to the certification server (1500, 1501, 1502) having certified the authentication copy of said management coupon can only occur if said new electronic correspondence conforms to said management rules.

17. The system for secure electronic correspondence according to one of claims 1 to 16 wherein, for each electronic correspondence operation whose probative value must be evaluated, at least one of the composition (1710, 1711, 1712), switching (1720, 1721, 1722), transmission (1730, 1731, 1732), archiving (1740, 1741, 1742) and electronic publishing (1750, 1751, 1752) is adapted to receive from the domiciliation server (1300, 1301, 1302) a number of certification tokens determined by the type of said operation, said tokens being transmitted to it by the certification server (1500, 1501, 1502).

18. The system for secure electronic correspondence according to claim 17, wherein the certification server (1500, 1501, 1502) is adapted to deliver a probative value certificate to the sender user (1101) only if and when it has received from the domiciliation server (1300, 1301, 1302), before the expiration of a settable time period, all of the tokens it has issued, said return being proof of correct execution by said servers of the operations specified by the certification server (1500, 1501, 1502) for the type of the correspondence operation whose probative value must be evaluated.

19. The system for secure electronic correspondence according to one of claims 1 to 18, wherein those of the servers which perform composition (1711, 1712), switching (1721, 1722) and transmission (1731, 1732) functions belong to a first group of servers interconnected by a local communication network and exchange data by a Pass File type protocol.

20. The system for secure electronic correspondence according to claim 19, wherein those of the servers which perform archiving (1741) and electronic publishing (1751) functions limited to a territorial jurisdiction belong to a second group of servers connected to the local network servers of the first group by an extended network communication and exchange data with said network by a Switch Out type protocol.

21. A method of secure electronic correspondence between at least one sender user (1101) and at least one addressee user (1102), said method comprising at least a step of connecting to an electronic correspondence domiciliation server (1300, 1301, 1302), at least a step of composing said correspondence, and at least a step of connecting the domiciliation server to an electronic correspondence certification server (1500, 1501,1502), said method being such that, for each correspondence transaction with probative value:
- said composition server generates at least two specimens, as well as two certified originals with probative value and sends one of the specimens to said domiciliation server (1300, 1301, 1302);
- said domiciliation server:
∘ authenticates said sender user (1100) by strong authentication;
∘ makes said specimen available to said user sender;
∘ receives from said sender user a validation of the correspondence;
∘ creates a legal signature structured file making the link between the strong authentication, said specimen, and the validation of the correspondence, and seals this structure file with a SHA1 hash;
∘ then transmits to said certification server a certified copy of said structured file;
- said certification server:
∘ performs a conformity check on the summary list of the structured file, as well as a consistency check against the database;
∘ electronically signs the structured file, then transmits an audit trail resulting from the compliance check to an escrow server of a court bailiff, said audit trail comprising the checks and the signed copy of the structured file;
∘ issues, from an escrow certificate from the bailiff, a probative value certificate for the legal signature of the originals and the electronic signature of the structure file;
- after validation by the sender user and recording of a report establishing the probative value of the original, said composition server processes the other specimen in order for it to be sent to the recipient user of the correspondence operation.
